# EUROPÄISCHE PATENTSCHRIFT

(11) **EP 2 783 487 B1**
(45) Veröffentlichungstag und Bekanntmachung des Hinweises auf die Patenterteilung: **02.08.2017**
(21) Anmeldenummer: 12780104.1
(22) Anmeldetag: 28.09.2012
(51) Int. Cl.: H04L 12/939, H04L 12/413, H04L 12/801

(54) **VERFAHREN ZUM BETREIBEN EINES KOMMUNIKATIONSNETZWERKES UND NETZWERKANORDNUNG**
METHOD FOR OPERATING A COMMUNICATIONS NETWORK AND NETWORK ARRANGEMENT
PROCÉDÉ D'EXPLOITATION D'UN RÉSEAU DE COMMUNICATION ET SYSTÈME DE RÉSEAU

(30) Priorität: 09.01.2012 DE 102012000185
(43) Veröffentlichungstag der Anmeldung: 01.10.2014
(73) Patentinhaber: Siemens Aktiengesellschaft, 80333 München (DE)
(72) Erfinder: ZIRKLER, Andreas, 81671 München (DE); FIEGE, Ludger, 85567 Grafing (DE); SCHMID, Thomas, 70771 Leinfelden-Echterdingen (DE); ARMBRUSTER, Michael, 81825 München (DE); RIEDL, Johannes, 84030 Ergolding (DE)
(86) Internationale Anmeldenummer: PCT/EP2012/069273
(87) Internationale Veröffentlichungsnummer: WO 2013/104436

(56) Entgegenhaltungen:
- EP-A1- 1 548 992
- WO-A2-2005/053223
- US-A1- 2007 286 075
- US-A1- 2009 122 812

## Beschreibung

Die vorliegende Erfindung betrifft ein Verfahren zum Betreiben eines Kommunikationsnetzwerkes und eine Netzwerkanordnung, welche mit dem vorgeschlagenen Verfahren arbeitet. Das Verfahren zum Betreiben kann insbesondere in einer Ethernet-Umgebung zum Einsatz kommen.

Kommunikationsnetzwerke finden immer breitere Anwendung zum Messen, Steuern und Regeln komplexer technischer Systeme. Beispielsweise werden zunehmend Netzwerke in Kraftfahrzeugen eingesetzt, um Fahrzeugsteuerungssysteme auszubilden. In entsprechenden komplexen und sicherheitsrelevanten technischen Systemen werden hohe Anforderungen an die Verfügbarkeit der als Netzwerkeinrichtungen vorgesehenen Steuerungselemente gestellt. Beim Ausfall von einzelnen Komponenten, wie beispielsweise Sensoren oder Steuereinrichtungen, darf dies nicht zum Ausfall des Gesamtsystems führen. Besonders sicherheitsrelevant sind Drive-by-Wire-Systeme, z.B. Steer-by-Wire-Systeme, bei denen elektromotorisch über eine Netzwerkkopplung von Sensor-, Steuer- und Aktoreinrichtungen die Lenkradstellung in Radpositionen umgesetzt wird.

In der Vergangenheit wurden redundante Ausführungen besonders kritischer Komponenten eingesetzt, so dass im Fehlerfall die jeweilige Backup oder redundante Komponente, die jeweilige Aufgabe übernehmen kann. Bei mehreren redundanten Komponenten muss sichergestellt sein, dass nur eine der beiden oder mehreren Steuereinrichtungen, die jeweilige Steuerhoheit innehat. Außerdem dürfen nicht widersprüchliche Steuerungsbefehle für gleiche Steuerfunktionalitäten entstehen. Deshalb ist es notwendig, dass alle Steuerungskomponenten über dieselben Informationen oder Daten in dem Netzwerk verfügen.

Insofern müssen Fehler in Form von inkonsistenten Daten, die beispielsweise bei einer Datenübertragung über das verwendete Netzwerk korrumpiert sein können, erkannt werden. Eine Standard-Netzwerkumgebung, die weit verbreitet ist, basiert auf dem Ethernet-Protokoll. Die Verwendung von Ethernet-Infrastrukturen hat den Vorteil, dass standardisierte Netzwerkeinrichtungen und Verfahren zum Einsatz kommen können. In der Vergangenheit wurden jedoch auch proprietäre Datenbusse verwendet, um Steuerungskomponenten mit innerer Redundanz, also doppelt ausgelegter Funktionalität, miteinander zu verknüpfen.

Darüber hinaus ist es möglich, dass in dem Netzwerk eingesetzte Knoten fehlerhaft sind. Bekannt sind zum Beispiel Fehlertypen, bei denen eine Netzwerkeinrichtung mit hoher Frequenz Daten in das Netzwerk sendet, die keine für die anderen Steuereinrichtungen brauchbaren Daten enthalten. Man spricht auch von einem "Babbling Idiot". Die Netzwerkinfrastruktur kann dann derart durch hohe Datenraten belastet werden, dass echte Steuer- oder Sensordaten nicht mehr zwischen den noch funktionierenden Netzwerkeinrichtungen ausgetauscht werden können. Es ist wünschenswert, insbesondere solche Fehlverhalten in sicherheitsrelevanten Netzwerken zu behandeln und die vorliegenden Daten geeignet zu verarbeiten, um einen zuverlässigen Betrieb der nicht betroffenen Einrichtungen im Netzwerk zu gewährleisten.

In der Vergangenheit wurden Verfahren vorgeschlagen, bei denen der Datenaustausch zwischen vorgegebenen Kommunikationspartnern bandbreitenbegrenzt wurde. Defekte Netzwerkknoten können allerdings auch Datenpakete mit unzutreffenden Adressdaten erzeugen, was im Rahmen von einer dezidierten Bandbreitenbegrenzung nicht in jeder Netzwerktopologie, insbesondere nicht in einer ringförmigen Netzwerktopologie, zufriedenstellend behandelt werden kann.

Außerdem sind Verfahren bekannt, die auf einer synchronisierten Kommunikation der Netzwerkknoten untereinander basieren.

Dabei werden bestimmte Zeitschlitze für den Datenaustausch zwischen vorgegebenen Kommunikationspartnern definiert. Solche Zeitschlitzverfahren erfordern eine aufwendige Synchronisation und spezielle Hardware-Einrichtungen.

Aus der Druckschrift EP 1 548992 A1 geht ein Verfahren hervor, welches darauf ausgerichtet ist "Babbling Idiot" Fehler in einem CAN Bussystem eines Flugzeugs zu verhindern. Das Problem, dass eine Netzwerkeinrichtung mit hoher Frequenz Daten in das Netzwerk sendet wird dadurch verhindert, dass ein Bus Guardian die fehlerhafte Netzwerkeinrichtung vom Netz trennt, sobald der Fehler entdeckt wird.

Aus der Druckschrift WO 2005/053223 A2 geht ebenfalls eine Vermeidung eines "Babbling Idiot"-Fehlers in einem CAN-Bussystem mit Master und Slave Stationen hervor. Gemäß dieser Offenbarung wird dieses Problem dadurch gelöst, dass eine Master-Station eine fehlerhafte Slave-Station vom Netzwerk isoliert.

Die Druckschrift US 2009/122812 A1 zeigt ein Verfahren für das sichere Hochfahren eines "Time Triggered"-Ringnetzes. Der zentrale Guardian des Netzes stellt sicher, dass jede Station, die ein "Babbling Idiot" Verhalten zeigt, vom Netzwerk aus unsichtbar wird. Der Guardian bestimmt das Verhalten jeder Station im Netzwerk. Wenn die Datenübertragungsrate einer Station eine für diese vorgegebene Übertragungsbandbreite übersteigt, erkennt der Guardian die Station als fehlerhaft.

US 2007 / 0 286 075 A1 offenbart ein Verfahren zum Steuern von Datenübertragungen. Das Verfahren weist das Setzen eines Ratenkriteriums für jede einer Mehrzahl von Schnittstellen eines Netzwerkelements auf. Beim Übermitteln eines ersten Datenpakets, das eine erste Größe aufweist, über eine gegebene Schnittstelle des Netzwerkelements zu einem ersten Zeitpunkt wird ein Zeitstempelwert basierend auf dem ersten Zeitpunkt, der ersten Größe und dem Ratenkriterium, das für die gegebene Schnittstelle gesetzt ist, berechnet. Eine Disposition eines zweiten Datenpakets zur Übermittlung über die gegebene Schnittstelle zu einem zweiten Zeitpunkt, nachfolgend zu dem ersten Zeitpunkt, wird in Antwort auf den Zeitstempel bestimmt.

Es ist daher eine Aufgabe der vorliegenden Erfindung, eine verbessertes Verfahren und/oder eine Netzwerkanordnung bereitzustellen.

Demgemäß wird ein Verfahren zum Betreiben eines Kommunikationsnetzwerkes, an welches Netzwerkeinrichtungen gekoppelt sind, vorgeschlagen. Eine jeweilige Netzwerkeinrichtung umfasst mindestens eine Switch-Einrichtung und mindestens eine Steuereinrichtung, welche an die Switch-Einrichtung gekoppelt ist. Die Switch-Einrichtung hat mindestens einen Empfangsport und mindestens einen Sendeport zum Senden und Empfangen von Daten über das Kommunikationsnetzwerk, und den Empfangsports ist eine Fuse-Einrichtung zum Begrenzen einer Datenübertragungsrate zugeordnet. Das Verfahren umfasst:
Vorgeben einer maximalen Datenübertragungsrate beim Senden von Daten, wobei die Netzwerkeinrichtungen eingerichtet sind, Daten mit einer Datenrate zu senden, welche niedriger ist als die vorgegebene maximale Datenübertragungsrate;
Überwachen einer Datenübertragungsrate von empfangenen Daten an den Empfangsports der Netzwerkeinrichtungen; und
Blockieren eines Datenempfangs an einem Empfangsport, falls ankommende Daten eine Datenübertragungsrate haben, die größer ist als die vorgegebene maximale Datenübertragungsrate.

Die Kombination von einem Sende- und Empfangsport kann auch als ein Kommunikationsport der jeweiligen Einrichtung verstanden werden.

Bei einer Variante des Verfahrens umfasst eine jeweilige Netzwerkeinrichtung mindestens eine Switch-Einrichtung und eine erste und eine zweite Steuereinrichtung, welche an die Switch-Einrichtung gekoppelt ist. Die Switch-Einrichtung für die erste und die zweite Steuereinrichtung hat jeweils einen Empfangsport und einen Sendeport zum Senden und Empfangen von Daten über das Kommunikationsnetzwerk. Den Empfangsports sind Fuse-Einrichtungen zum Begrenzen einer Datenübertragungsrate zugeordnet sind.

Das Verfahren umfasst dann ferner:
Erzeugen von ersten Daten durch die erste Steuereinrichtung und zweiten Daten durch die zweite Steuerreinrichtung, wobei die ersten Daten und die zweiten Daten durch eine vorgegebene Kodierung miteinander verknüpft sind;
Senden der ersten Daten von der ersten Steuereinrichtung über die Switch-Einrichtung(en) an die zweite Steuereinrichtung und Senden der zweiten Daten von der zweiten Steuereinrichtung über die Switch-Einrichtung(en) an die erste Steuereinrichtung;
Senden der ersten Daten und der zweiten Daten über einen ersten Kommunikationspfad von dem Sendeport der Switch-Einrichtung für die erste Steuereinrichtung zu dem Empfangsport der Switch-Einrichtung für die zweite Steuereinrichtung;
Senden der ersten Daten und der zweiten Daten über einen zweiten Kommunikationspfad von dem Sendeport der Switch-Einrichtung für die zweite Steuereinrichtung zu dem Empfangsport der Switch-Einrichtung für die erste Steuereinrichtung. Dabei durchlaufen die Daten des ersten und des zweiten Kommunikationspfads dieselben Netzwerkeinrichtungen in entgegen gesetzter Richtung.

Die Überwachung der Datenübertragungsrate und das potenzielle Blockieren eines Datenempfangs ermöglicht insbesondere die Behandlung von sogenannten "Babbling Idiots", also im Netzwerk vorliegende Netzwerkeinrichtungen, die aus einem Defekt heraus sinnlose oder nicht von anderen Einrichtungen im Netzwerk zu interpretierende Daten senden. Häufig werden diese "sinnlosen" Daten mit hoher Frequenz von den fehlerhaften Einrichtungen absetzt, sodass eine Belastung der Netzwerkinfrastuktur und Kommunikationspfade entstehen kann. Die Deaktivierung der betroffenen Empfangsports bzw. das Blockieren des Datenempfangs für zu hohe Datenraten ermöglicht dennoch eine zuverlässige Datenkommunikation, selbst wenn Babbling Idiots vorliegen.

Unter einer Datenübertragungsrate versteht man die digitale Datenmenge, die innerhalb einer Zeiteinheit über einen Übertragungskanal oder Kommunikationspfad übertragen wird. Man spricht auch von einer Datentransferrate, Datenrate, Übertragungsgeschwindigkeit, Verbindungsgeschwindigkeit, Bandbreite oder Kapazität. Eine gängige Angabe für eine Datenübertragungsrate lautet in Bit pro Sekunde.

Die maximale Datenüberragungsrate wird vorzugsweise in Abhängigkeit von der Bandbreite des Kommunikationsnetzwerks bestimmt. Wenn aus der Topologie des Netzwerks alle sinnvollen Datentransferraten zwischen den Netzwerkknoten bzw. Netzwerkeinrichtungen oder Sende- und Empfangsports bekannt sind, können die Fuse-Einrichtungen entsprechend sensibel eingerichtet werden.

In Ausführungsformen des Verfahrens ist ferner vorgesehen: Freigeben eines Datenempfangs an einem Empfangsport, falls ankommende Daten eine Datenübertragungsrate haben, die geringer ist als die vorgegebene maximale Datenübertragungsrate.

Die Wiederfreigabe führt dazu, dass nach kurzer Unterbrechung wieder ein Kommunikationspfad im Netzwerk entsteht, über den die Daten ausgetauscht werden können, die nicht von einer defekten Netzwerkeinrichtung stammen. Somit wird ein regulärer Datentransfer immer gewährleistet.

Denkbar ist auch, dass für jeden Kommunikationspfad zwischen einem Sendeport und einem Empfangsport eine maximale Linkübertragungsrate vorgegeben wird. Beispielsweise kann beim Entwurf des Kommunikationsnetzwerkes abgeschätzt werden, welche Linkübertragungsraten vorliegen können. Die Fuse-Einrichtungen werden dann entsprechend sensibilisiert, sodass bei Überschreiten der maximalen Linkübertragungsrate der Datenempfang unterbunden wird.

Alternativ oder zusätzlich können die Daten mindestens zwei Prioritätsklassen zugeordnet werden, und es wird die Datenübertragungsrate ausschließlich für Daten einer ausgewählten Prioritätsklasse überwacht und/oder ein Datenempfang blockiert. Beispielsweise kann eine erste Prioritätsklasse besonders sicherheitsrelevante Daten betreffen und eine zweite Prioritätsklasse weniger kritische Daten. Beim Entwurf des Kommunikationsnetzwerks werden dann die maximalen Datentransferraten festgelegt und die Fuse-Einrichtungen entsprechend eingestellt. An den Fuse-Einrichtungen werden die verschiedenen Prioritätsklassen erfasst und die Daten in Abhängigkeit davon gefiltert oder nicht.

Das Kommunikationsnetzwerk selbst kann eine Ethernet-Infrastruktur umfassen. Die Switch-Einrichtung kann auch als Bridge- oder Router-Einrichtung bezeichnet werden. Bei Netzwerkeinrichtungen spricht man auch von Netzwerk-Knoten, Netzwerk-Komponenten oder Netzwerk-Elementen.

Als in den Netzwerkeinrichtungen vorgesehene Steuereinrichtungen kommen beispielsweise eine CPU, ein Mikroprozessor oder auch andere programmierbare Schaltkreise in Frage. Als Steuereinrichtung kann ferner eine Sensor- oder Aktoreinrichtung verstanden werden.

Das Kommunikationsnetzwerk oder Netzwerk-Protokoll sieht vorzugsweise Punkt-zu-Punkt-Verbindungen von einem Teilnehmer oder einer Netzwerkeinrichtung zu einer anderen vor. Dabei kann eine bidirektionale oder Duplex-Kommunikation möglich sein.

Die ersten und zweiten Daten, welche über eine vorgegebene Kodierung miteinander verknüpft sind, können beispielsweise durch eine Bit-Inversion erzeugt sein. Die vorgegebene Kodierung lässt eine Konsistenzprüfung der beiden Daten miteinander zu. Ist beispielsweise durch den Datentransfer über das Netzwerk eines der Daten(pakete) gestört, kann dies durch Vergleich mit dem jeweils anderen Daten(paket) unter Berücksichtigung der jeweiligen Kodierung erkannt werden.

Insbesondere bei Ethernet basierten Kommunikationsnetzwerken ist eine bidirektionale Kommunikation (sog. Duplex-Kommunikation) möglich. Insofern verläuft der erste Kommunikationspfad vom Sendeport der Switch-Einrichtung des ersten Steuergeräts zum Empfangsport der Switch-Einrichtung des zweiten Steuergeräts, sowie der zweite Kommunikationspfad vom Sendeport der Switch-Einrichtung des zweiten Steuergeräts zum Empfangsport der Switch-Einrichtung des ersten Steuergeräts. Der erste Kommunikationspfad verläuft beispielsweise ringförmig über weitere Switch-Einrichtungen oder weitere Netzwerkeinrichtungen über das Kommunikationsnetzwerk. Der zweite Kommunikationspfad durchläuft die Netzwerkeinrichtungen in entgegengesetzter Richtung. Insofern wird ein redundanter Versand und eine Prüfung der Funktionsfähigkeit aller beteiligten Netzwerkeinrichtungen möglich. Vorzugsweise werden die ersten und zweiten Daten von der ersten zur zweiten Steuereinrichtung oder umgekehrt ausschließlich über die Switch-Einrichtung innerhalb der Netzwerkeinrichtung geführt.

Das Verfahren zum Betreiben eines Kommunikationsnetzwerks, insbesondere auf Ethernet-Basis führt zu einer Ringstruktur, wobei die sich ergebenden Kommunikationsrichtungen des Ethernet-Rings verwendet werden. Im Fehlerfall einer der mit einer Steuerungseinheit verbundenen Switch-Einrichtung einer Netzwerkeinrichtung, kann dabei nur eine der Richtungen betroffen sein, so dass nach wie vor ein konsistentes Datum bzw. Daten übermittelt wird/werden. Durch Vergleich der auf unterschiedlichen Kommunikationspfaden versendeten Daten, die insbesondere über eine Kodierung miteinander verknüpft sind, lässt sich eine flexible und zuverlässige Fehleranalyse durchführen. Man kann einfach die Steuerungskomponenten oder Einrichtungen eruieren, welche zu einem Fehler geführt haben. Diese werden vorzugsweise passiviert oder ausgeschaltet.

Daneben wird der Fehlerfall eines Babbling Idiots durch die Überprüfung der Datentransferrate und gegebenenfalls Blockieren des Empfangs derart behandelt, dass zumindest ein fehlerfrei übertragender Kommunikationspfad für nicht gestörte oder von einer defekten Einrichtung versendeten Daten vorliegt.

Bei Ausführungsformen des Verfahrens umfasst dasselbe ferner:
Senden der ersten Daten und der zweiten Daten über den Sendeport der Switch-Einrichtung für die erste Steuereinrichtung an den Empfangsport der Switch-Einrichtung für die zweite Steuereinrichtung über mindestens eine weitere Switch-Einrichtung einer weiteren Netzwerkeinrichtung mit einer ersten und zweiten Steuereinrichtung; und
Senden der ersten Daten und der zweiten Daten über den Sendeport der Switch-Einrichtung für die zweite Steuereinrichtung an den Empfangsport der Switch-Einrichtung für die erste Steuereinrichtung über mindestens eine weitere Switch-Einrichtung einer weiteren Netzwerkeinrichtung mit einer ersten und zweiten Steuereinrichtung.

Dabei werden in einer jeweiligen weiteren Switch-Einrichtung an einem Empfangsport für die zweite Steuereinrichtung der weiteren Switch-Einrichtung empfangene Daten an einen Sendeport für die erste Steuereinrichtung der weiteren Switch-Einrichtung weitergeleitet. An einem Empfangsport für die erste Steuereinrichtung der weiteren Switch-Einrichtung empfangene Daten werden an einen Sendeport für die zweite Steuereinrichtung der weiteren Switch-Einrichtung weitergeleitet. An den Eingangsports sind entsprechende Fuse-Einrichtungen angeordnet.

Die unkodierten bzw. kodierten Daten werden somit von einem ersten Kanal, der von einer ersten Steuereinrichtung ausgeht, zu einem Kanal, welcher der zweiten Steuereinrichtung zugeordnet ist, versendet. Dies erfolgt auch umgekehrt, wodurch die sendende Steuerungskomponente feststellen kann, ob der jeweils andere Kanal, welcher der zweiten (redundanten) Steuereinrichtung zugeordnet ist, dasselbe Datenergebnis hat. Insofern kann festgestellt werden, ob der zugeordnete Ethernet-Switch bzw. die Switch-Einrichtung zuverlässig funktioniert. Wird erkannt, dass die der Steuereinrichtung zugeordnete Switch-Einrichtung fehlerhaft agiert, passiviert sich vorzugsweise die sendende Steuereinrichtung.

Das Verfahren kann ferner umfassen:
Vergleichen der ersten Daten mit den zweiten Daten in der ersten und/oder zweiten Steuereinrichtung zum Erzeugen eines Vergleichsergebnisses; und
Passivieren der Netzwerkeinrichtung in Abhängigkeit von dem Vergleichsergebnis.

Wird erkannt, dass die ersten und zweiten Daten nicht miteinander konsistent sind, das heißt, nicht durch die vorgegebene Kodierung miteinander verknüpft sind, lässt sich ein Fehler bei der Datenübertragung oder Erzeugung erkennen.

Das Verfahren kann außerdem umfassen:
erneutes Senden der ersten und der zweiten Daten über den ersten und den zweiten Kommunikationspfad.

Falls beispielsweise Daten in einem Kommunikationszyklus von der sendenden Steuereinrichtung nicht wieder erkannt oder empfangen werden, kann durch mehrfaches Versenden und Überprüfen auf korrekt empfangene Daten auf eine im Kommunikationspfad vorliegende fehlerhafte Netzwerk-Komponente geschlossen werden.

Bei dem Verfahren können ferner in einer weiteren Netzwerkeinrichtung die ersten Daten und die zweiten Daten an Eingangsports für unterschiedliche Steuereinrichtungen empfangen werden und die empfangenen Daten miteinander verglichen werden.

Vorzugsweise umfasst das Verfahren zum Betreiben der Netzwerkanordnung ferner das Anzeigen einer Fehlermeldung, falls verglichene erste Daten und zweite Daten nicht durch die vorgegebene Kodierung miteinander verknüpft sind.

In Ausführungsformen werden bestimmten Fuse-Einrichtungen von zumindest zwei Netzwerkeinrichtungen verschiedene Schwellwerte für die Datenübertragungsrate zugeordnet, wobei ein jeder der verschiedenen Schwellwerte kleiner gleich der vorgegebenen maximalen Datenübertragungsrate ist. Dabei wird ein Datenempfang an einem Empfangsport der zumindest zwei Netzwerkeinrichtungen blockiert, falls die an dem zugeordneten Empfangsport ankommenden Daten eine Datenübertragungsrate haben, die größer als der zugeordnete Schwellwert ist.

Folglich werden zumindest zwei Fuse-Einrichtungen (Fuses, Sicherungen) unterschiedlicher Netzwerkeinrichtungen verschiedene oder unterschiedliche Schwellwerte für die Datenübertragungsrate zugeordnet. Jeder dieser Schwellwerte ist kleiner oder gleich der vorgegebenen maximalen Datenübertragungsrate in dem Kommunikationsnetzwerk. Die Schwellwerte für die Datenübertragungsrate können auch als Bandbreitengrenze bezeichnet werden.

Durch die Verwendung verschiedener Schwellwerte wird es möglich, in dem Kommunikationsnetzwerk unterschiedliche Segmente oder Netzwerksegmente auszubilden. Die Netzwerksegmente werden dabei derart ausgebildet, dass sie als ganzes Segment ausfallen dürfen, ohne das Gesamtsystem in einen gefährlichen Zustand zu bringen, z.B. Netzwerksegmente mit gemeinsamer Stromversorgung. Ein Gesamtsystem, das von mehreren Stromversorgungen versorgt wird, muss ohnehin so aufgebaut sein, dass es den Ausfall einer Stromversorgung verkraften kann.

Dabei wird insbesondere eine mögliche Verschleppung einer Blockierung, wenn eine Netzwerkeinrichtung knapp unter der Bandbreitengrenze babbelt, durch Segmente, die mit Sicherungen mit niedrigeren Bandbreitengrenzwerten abgegrenzt sind, gezielt auf ein Segment begrenzt.

Der jeweilige Schwellwert kann beispielsweise durch eine Prozentangabe bezogen auf die vorgegebene maximale Datenübertragungsrate der Netzwerkanordnung angegeben werden. So können beispielsweise verschiedene Schwellwerte bei 80%, 50%, 35%, 20% und 10% der vorgegebenen maximalen Datenübertragungsrate eingestellt werden. Die Schwellwerte können beispielsweise anhand der über den jeweiligen Link vorgesehenen Soll-Datenübertragungsrate, eventuell zusätzlich eines Sicherheitsaufschlages, bestimmt werden.

Für die Umsetzung des Konzepts der Fuse-Einrichtungen ist insbesondere keinerlei Änderung an der Hardware der Standard-Switchkomponenten notwendig. Entweder können die Features hochwertiger Switch-Hardware benutzt werden, oder die Switch-Hardware kann durch ein relativ einfaches Vorschaltgerät ergänzt werden. Die verfügbare Bandbreite wird je nach Ausführungsform nicht oder nur in geringem Maße beeinträchtigt.

In Ausführungsformen werden die Netzwerkeinrichtungen in einer Mehrzahl von Netzwerksegmenten verteilt angeordnet, wobei einem jeden der Netzwerksegmente eine Teilmenge der Netzwerkeinrichtungen zugeordnet wird. Hierbei wird bei einem jeden Netzwerksegment mit zumindest zwei zugeordneten Netzwerkeinrichtungen einer an einem Randbereich des Netzwerksegments angeordneten Fuse-Einrichtung ein kleinerer Schwellwert für die Datenübertragungsrate als bei einer in einem Mittenbereich des Netzwerksegments angeordneten Fuse-Einrichtung zugeordnet wird.

Das jeweilige Netzwerksegment kann nach außen hin über den relativ kleineren Schwellwert für die Datenübertragungsrate besser abgeschottet werden, als das im Mittenbereich oder Innenraum des Netzwerksegments notwendig wäre. Folglich haben Fuse-Einrichtungen des Randbereichs einen kleineren Schwellwert für die Datenübertragungsrate als die Fuse-Einrichtungen im Mittenbereich des Netzwerksegments.

Die Netzwerksegmente werden mit kleineren Schwellwerten von bzw. nach außen, d.h. mit kleineren Sicherungen mit geringerer zulässiger Bandbreite geschützt. Dadurch löst in dem Fall, dass ein Babbling Idiot (defekte Netzwerkeinrichtung) mit einer Bandbreite sendet, welche etwas kleiner als die Auslösebandbreite der Fuse-Einrichtungen ist, nicht mehr quasi zufällig irgendeine Fuse-Einrichtung aus, sondern gezielt die mit dem kleineren Schwellwert (kleinere Bandbreite), so dass das betroffene Netzwerksegment vom Rest des Kommunikationsnetzwerkes abgetrennt wird.

Die Sicherungen (Fuses) mit größerer zulässiger Bandbreite in den Mittenbereichen der Segmente können in Ausführungsformen auch weggelassen werden. Diese sorgen nur dafür, dass ein Babbling Idiot, der mit sehr hoher Bandbreite babbelt, direkt von seinen Nachbar-Knoten isoliert wird und die Nachbar-Knoten so nicht beeinträchtigt werden. Lässt man die Sicherungen in den Mittenbereichen weg, würde immer das ganze Segment ausfallen, was aber vorliegend nicht zu einem kritischen Zustand des Gesamtsystems führt.

Insbesondere werden die Teilmengen als disjunkte Teilmengen gebildet.

In Ausführungsformen umfassen die Netzwerkeinrichtungen zumindest zwei hinsichtlich ihrer Funktionalität redundante Netzwerkeinrichtungen, wobei die Teilmengen derart gebildet werden, dass einer jeden der Teilmengen höchstens eine der redundanten Netzwerkeinrichtungen zugeordnet wird.

Hinsichtlich ihrer Funktionalität redundante Netzwerkeinrichtungen werden in unterschiedlichen Netzwerksegmenten angeordnet, so dass bei einem Ausfall eines Netzwerksegments zumindest noch eine redundante Netzwerkeinrichtung in einem anderen Netzwerksegment vorhanden ist und damit die Gesamtfunktionalität des Gesamtsystems nicht gefährdet ist.

In Ausführungsformen wird in dem Kommunikationsnetzwerks eine Mehrzahl von virtuellen Netzen derart eingerichtet, um ein Überschreiten des Schwellwertes für die Datenübertragungsrate an einer Fuse-Einrichtung eines Netzwerksegments aufgrund eines Empfangs von Daten aus einem anderen Netzwerksegment zu vermeiden. Die virtuellen Netze werden insbesondere als Virtual Local Area Networks (VLANs) ausgebildet.

Dabei wird durch die Berücksichtigung der verschiedenen virtuellen Netze, zum Beispiel verschiedener VLANs, erreicht, dass ein Segment nicht aufgrund von Paketen abgetrennt werden kann, die außerhalb des Segments eingespeist wurden. Das wird erreicht, indem die VLANs gezielt so konfiguriert werden, dass Pakete nicht durch ein Segment, insbesondere einen äußeren Ring, durch geleitet werden.

Durch die Verwendung virtueller Netze in dem Kommunikationsnetzwerk ist es auch möglich, die Schwellwerte einzelner Fuse-Einrichtungen, insbesondere im Randbereich der einzelnen Netzwerksegmente, zu maximieren. Dadurch wird die Gesamtausfallwahrscheinlichkeit des Gesamtsystems Kommunikationsnetzwerk minimiert. Alternativ zu VLANs können andere geeignete Virtualisierungstechnologien eingesetzt werden.

In Ausführungsformen wird der jeweilige Schwellwert für die Datenübertragungsrate der jeweiligen Fuse-Einrichtung in Abhängigkeit von dem virtuellen Netz eingestellt und überwacht, in dem die jeweilige Fuse-Einrichtung angeordnet ist.

Bei dieser Ausführungsform können die Schwellwerte spezifisch hinsichtlich des virtuellen Netzes eingestellt werden. Falls beispielsweise Pakete durch ein Netzwerksegment hindurch geleitet werden müssen, weil sonst die Netzwerkeinrichtungen neben diesem Netzwerksegment nicht oder nicht über disjunkte Pfade erreichbar wären, können die Schwellwerte (Bandbreitengrenze), die durch das entsprechende Netzwerksegment hindurchgeleitet werden, spezifisch, insbesondere VLANspezifisch, begrenzt werden. Dadurch kann ebenfalls vermieden werden, dass aufgrund eines Datenpaketes, das von einem Babbling Idiot außerhalb eines Netzwerksegmentes erzeugt wurde, dieses eigentliche intakte Netzwerksegment abgetrennt wird.

Schließlich wird eine Netzwerkanordnung mit mehreren Netzwerkeinrichtung vorgeschlagen. Die Netzwerkeinrichtungen sind an ein Kommunikationsnetzwerk, insbesondere eine Ethernet-Infrastruktur, gekoppelt, und eine jeweilige Netzwerkeinrichtung umfasst mindestens eine Switch-Einrichtung und eine Steuereinrichtung. Dabei ist die Switch-Einrichtung an die Steuereinrichtungen gekoppelt, und die Switch-Einrichtung umfasst mindestens einen Empfangsport und einen Sendeport zum Senden und Empfangen von Daten über das Kommunikationsnetzwerk. Die Netzwerkanordnung umfasst Fuse-Einrichtungen, welche zum Begrenzen einer Datenübertragungsrate den Empfangsports zugeordnet sind. Die Netzwerkeinrichtungen sind eingerichtet, um ein Verfahren, wie zuvor beschrieben, durchzuführen.

Die Netzwerkanordnung ist insbesondere Teil eines Fahrzeugs.

Die Netzwerkeinrichtungen können Sensoreinrichtungen oder Aktoreinrichtungen sein. Als Sensoreinrichtungen sind Drehzahlsensoren, Brems- oder Schaltsteuerungseinrichtungen denkbar. Es können auch Steuereinrichtungen eingesetzt sein, die beispielsweise ein Drive-by-Wire ermöglichen. Dabei werden beispielsweise Lenk- oder Beschleunigungsimpulse elektronisch über das Netzwerk an entsprechende Aktoren übergeben, so dass die gewünschte Reaktion des Fahrzeugs einsetzt.

Die Fuse-Einrichtungen sind als Netzwerksicherungen oder Fuses ausgestaltet. Bei Erreichen eines vorgegebene Schwellwertes einer Datenübertragungsrate für die eine jeweilige Fuse-Einrichtung durchlaufenden Daten blockiert die Fuse-Einrichtung den weiteren Datenverkehr. Sobald die Datenrate wieder unter dem festgelegten Schwellwert ist, können wieder Daten durch die Fuse-Einrichtungen laufen.

Der Schwellwert wird insbesondere als die maximale Datentransferrate festgelegt.

Insgesamt ergibt sich eine besonders zuverlässige Netzwerkanordnung, welche auch bei Störungen von Kommunikationskanälen sicher funktioniert. Die redundante ringförmige Kommunikationspfad-Einrichtung ermöglicht eine konsistente Steuergerätekommunikation und aufwandsgünstige Fehleranalyse und Korrektur und eine aufwandsgünstige Behandlung von Fehlern durch Babbling Idiots.

In Ausführungsformen der Netzwerkanordnung ist mindestens eine Netzwerkeinrichtung mit einer ersten und einer zweiten Switch-Einrichtung ausgestattet, wobei die erste Switch-Einrichtung der ersten Steuereinrichtung zugeordnet ist und die zweite Switch-Einrichtung der zweiten Steuereinrichtung zugeordnet ist. Dabei umfassen die Switch-Einrichtungen jeweils mindestens zwei Ports, und die Switch-Einrichtungen sind kommunikativ miteinander gekoppelt. Die Kopplung kann netzwerkeinrichtungsintern erfolgen oder aber mit Hilfe von Sende- und Eingangsports der Switch-Einrichtungen.

Es ist möglich, dass die Switch-Einrichtungen in einer einzelnen Switch-Einrichtung integriert sind, welche Die Eingangs- und Ausgangsports bereitstellt.

Bei weiteren Ausführungsformen der Netzwerkanordnung können ferner weitere Einfach-Netzwerkeinrichtungen mit jeweils einer Steuereinrichtung und einer Switch-Einrichtung in der Netzwerkanordnung vorgesehen sein. Einfach-Netzwerkeinrichtungen haben dabei keine redundante Steuereinrichtung und können für weniger sicherheitsrelevante Funktionen vorgesehen werden.

Die Netzwerkeinrichtungen und oder die Fuse-Einrichtungen sind vorzugsweise jeweils als einzelner FPGA, ASIC, IC Chip, oder fest verdrahteter Mikroschaltkreis ausgeführt. Beispielsweise kann eine Fuse-Einrichtung zum Ausbilden einer vorgeschlagenen Netzwerkanordnung jeweils vor einen Empfangsport oder Eingangsport einer Switch-Einrichtung gekoppelt werden.

Die Fuse-Einrichtungen können insbesondere als Teil der Switch-Einrichtungen ausgeführt sein. Denkbar ist ferner eine Implementierung als Programm oder Programmcode zum Betreiben einer der Switch-Einrichtungen.

Weiterhin wird ein Computerprogrammprodukt vorgeschlagen, welches auf einer oder mehrerer programmgesteuerten Einrichtung die Durchführung des wie oben erläuterten Verfahrens zum Betreiben einer Netzwerkanordnung veranlasst.

Ein Computerprogramm-Produkt wie ein Computerprogramm-Mittel kann beispielsweise als Speichermedium, wie Speicherkarte, USB-Stick, CD-ROM, DVD oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogramm-Produkt oder dem Computerprogramm-Mittel erfolgen. Als programmgesteuerte Einrichtung kommt insbesondere eine wie vorbeschriebene Netzwerkeinrichtung in Frage.

Weitere mögliche Implementierungen der Erfindung umfassen auch nicht explizit genannte Kombinationen von zuvor oder im Folgenden bezüglich der Ausführungsbeispiele beschriebenen Verfahrensschritte, Merkmale oder Ausführungsformen des Verfahrens, der Netzwerkanordnung, der Netzwerkeinrichtung oder eines Netzwerkknotens. Dabei wird der Fachmann auch Einzelaspekte als Verbesserungen oder Ergänzungen zu der jeweiligen Grundform der Erfindung hinzufügen oder abändern.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Dabei zeigen:
- Fig. 1: eine schematische Darstellung einer ersten Ausführungsform einer Netzwerkanordnung;
- Fig. 2, 3: schematische Darstellungen der Ausführungsform der Netzwerkanordnung mit Kommunikationsabläufen zur Erläuterung von Verfahrensaspekten einer Fehlerbehandlung.
- Fig. 4: eine schematische Darstellung einer zweiten Ausführungsform einer Netzwerkanordnung;
- Fig. 5: eine schematische Darstellung einer dritten Ausführungsform einer Netzwerkanordnung;
- Fig. 6: eine schematische Darstellung einer vierten Ausführungsform einer Netzwerkanordnung;
- Fig. 7: eine schematische Darstellung einer fünften Ausführungsform einer Netzwerkanordnung;
- Fig. 8: eine schematische Darstellung einer sechsten Ausführungsform einer Netzwerkanordnung; und
- Fig. 9: eine schematische Darstellung einer siebten Ausführungsform einer Netzwerkanordnung.

In den Figuren sind gleiche oder funktionsgleiche Elemente mit denselben Bezugszeichen versehen worden, sofern nichts anderes angegeben ist.

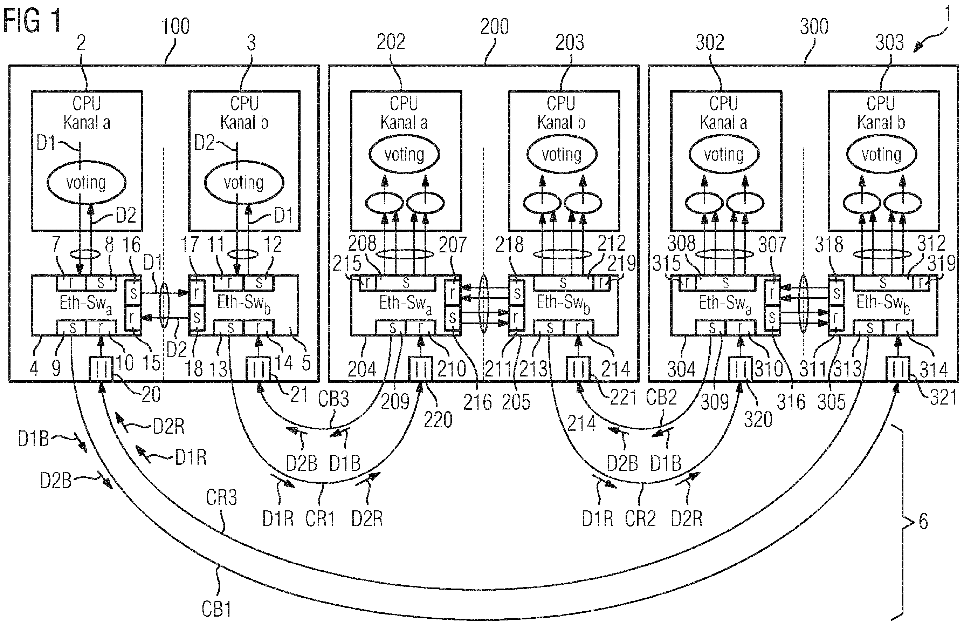

In der Fig. 1 ist eine schematische Darstellung einer ersten Ausführungsform einer Netzwerkanordnung dargestellt. Die Figuren dienen ferner, das Verfahren zum Betreiben der Netzwerkanordnung zu erläutern.

Die Fig. 1 zeigt eine Netzwerkanordnung 1, welche beispielsweise als Ethernet-Netzwerk in einem Fahrzeug eingesetzt werden kann. Dabei sind beispielhaft drei Netzwerkeinrichtungen 100, 200, 300 dargestellt. Es kann sich beispielsweise um Steuerungskomponenten handeln. Die Netzwerkeinrichtungen 100, 201, 301, welche im Folgenden auch als Netzwerk-Knoten oder Steuerungskomponenten bezeichnet werden, haben jeweils redundante Steuereinrichtungen 2, 3, 202, 203, 302, 303. Die Netzwerkeinrichtungen 100, 201, 301 können auch als Teilnehmer des Netzwerks bezeichnet werden.

Die Steuereinrichtungen 2, 3, 202, 203, 302, 303 sind angepasst, um bestimmte Aufgaben oder Funktionen zu vollziehen. Dies kann beispielsweise eine Sensorerfassung oder ein Aktor sein. Man kann sie auch als CPUs oder Mikroprozessoren implementieren. Denkbar ist zum Beispiel, dass die Steuerungskomponente 100 zum Erfassen eines Pedalstandes oder einer Lenkbewegung im Fahrzeug eingerichtet ist. Es ist zum Beispiel denkbar, dass die Steuerungskomponente bzw. Netzwerkeinrichtung 100 ein Steuersignal bzw. Steuerdaten an eine weitere Steuerungskomponente im Netzwerk sendet. Dabei ist insbesondere bei sicherheitsrelevanten Anwendungen in Kraftfahrzeugen, beispielsweise beim Drive-by-Wire zu gewährleisten, dass die Steuerdaten an allen Netzwerk-Knoten konsistent vorliegen.

Die Steuerungskomponenten bzw. Netzwerk-Knoten oder Netzwerkeinrichtungen 100, 200, 300 sind mit redundanten Ethernet-Switch-Einrichtungen 4, 5, 204, 205, 304, 305 ausgestattet. Die Ethernet-Switch-Einrichtungen 4, 5, 204, 205, 304, 305 haben jeweils Sende- oder Ausgangsports 9, 13, 209, 213, 309, 313 und Empfangs- oder Eingangsports 10, 14, 210, 214, 310, 314. mit Hilfe derer eine Kopplung an das Kommunikationsnetzwerk 6 erfolgt. Den Empfangsports 10, 14, 210, 214, 310, 314 sind Fuse-Einrichtungen 20, 21, 220, 221, 320, 321 zugeordnet, welche die jeweils eintreffende Datentransferrate erfasst. Wird eine vorgegebene maximale Datentransferrate überschritten, löst die Fuse-Einrichtung aus und blockiert den Datentransfer.

Die Netzwerkeinrichtung 100 umfasst dabei eine CPU 2 und eine zugeordnete Ethernet-Switch-Einrichtung 4. Die Ethernet-Switch-Einrichtung 4 hat einen Empfangsport 7 und einen Sendeport 8, welche mit der CPU 2 kommunikativ gekoppelt sind. Ein weiterer Sendeport 9 und Empfangsport 10 sind an das Netzwerk 6 zum Senden und Empfangen von Daten gekoppelt. Zwischen dem Netzwerk 6 und dem Empfangsport 10 ist die Fuse-Einrichtung 20 angeordnet. Ähnlich hat die CPU 3 eine Ethernet-Switch-Einrichtung 5, die einen Empfangsport 11 und einen Sendeport 12 zum Koppeln an die CPU 3 hat. Die Ethernet-Switch-Einrichtung 5 hat ferner einen Sendeport 13 und Empfangsport 14 zum Ankoppeln an das Netzwerk 6. Zwischen dem Netzwerk 6 und dem Empfangsport 14 ist die Fuse-Einrichtung 21 angeordnet. Darüber hinaus sind Sendeport und Empfangsport 15, 16, 17, 18 an den Ethernet-Switches 4, 5 vorgesehen, um eine Kopplung der beiden Switch-Einrichtungen 4, 5 untereinander vorzunehmen. Die beiden Switch-Einrichtungen 4, 5 sind dabei getrennt, beispielsweise als FPGA oder ASIC oder Mikrochip gefertigt.

Analog haben die Steuerungskomponenten 200 und 300 voneinander getrennte Switch-Einrichtungen 204, 205, 304, 305 mit Sende- und Empfangsports 204, 210, 213, 214, 215, 219, 304, 310, 313, 314, 315, 319 zur Kopplung an das Netzwerk 6. Ferner sind zwischen den Empfangports 210, 214, 310, 314 und dem Kommunikationsnetzwerk 6 Fuse-Einrichtungen 220, 221, 320, 321 angeordnet.

Netzwerk-Komponenten-intern erfolgt ein Abgleich der redundant erzeugten Steuerdaten D1 und D2. Die CPU 2 liefert Daten D1 und die CPU 3 liefert Daten D2. Dabei sind die Daten über eine Kodierung miteinander verknüpft. Das heißt, die Daten D1 ergeben sich aus den Daten D2 und umgekehrt über eine mathematische Operation. Denkbar ist beispielsweise eine einfache Bit-Inversion, so dass die Daten D1 das Inverse der Daten D2 und umgekehrt sind.

Der interne Konsistenzcheck in der Steuerungskomponente 100 erfolgt durch Erzeugen der Daten D1, Übergabe an den Ethernet-Switch 4 am Port 7 und die Weiterleitung über die Portkombination 16, 17 an den Ethernet-Switch 5, welcher die Daten D1 an die CPU 3 liefert. Analog werden die Daten D2 über die Ports 11, 18, 15 und 8 an die CPU 2 übermittelt. Insofern kann ein interner Konsistenzcheck durch die konsistente Kodierung der Daten D1 und D2 miteinander erfolgen. Sofern die Daten miteinander konsistent sind, das heißt, modulo der vorgegebenen Kodierung - beispielsweise eine Bit-Inversion - übereinstimmen, kann davon ausgegangen werden, dass der Datenempfang über die Ports 7 und 11, die Datensendung über die Ports 8 und 12, die Switch-Einrichtungen 4, 5 für den Datenaustausch zwischen eben diesen Ports, sowie auch die CPUs 2, 3 korrekt funktionieren. Liefert das Vergleichsergebnis hingegen eine Inkonsistenz der Daten D1 und D2 miteinander, deutet dies auf einen Fehler der CPUs 2, 3 oder der Switch-Einrichtungen 4, 5 hin, worauf eine mögliche Reaktion zur Datenkonsistenzsicherung die Passivierung - d.h. Deaktivierung - der Steuerungskomponente 100 ist.

Ähnliche Konsistenzprüfungen erfolgen in den Netzwerkeinrichtungen 200, 300, Die zwischen den beiden Switches 204, 205 bzw. 304, 305 übertragenen Daten sind in der Fig. 1 nicht mit Bezugszeichen versehen. Von oben nach unten werden jeweils vom Port 218 zum Port 207 Daten D2B und D1B übertragen. Vom Port 216 zum Port 211 werden die Daten D1R und D2R übertragen. Genauso werden vom Port 307 Daten vom Port 318 empfangen, die D2B und D1B entsprechen. Vom Port 311 werden Daten vom Port 316 empfangen, die D1R und D2R entsprechen.

Die Netzwerkanordnung 1 ist für ringförmige Kommunikationspfade ausgelegt. Durch die insbesondere bei einer Ethernet-Infrastruktur vorliegende Möglichkeit von Punkt-zu-Punkt-Verbindungen der Teilnehmer oder Netzwerkeinrichtungen untereinander, können zwei voneinander getrennte Kommunikationsringe entstehen, die sich nur die jeweiligen Switch-Einrichtungen teilen, dort aber empfangs- und sendeseitig keine gemeinsamen Ports verwenden. In dem Ausführungsbeispiel der Fig. 1 ergibt sich ein erster Kommunikationspfad, der aus den Segmenten CB1, CB2 und CB3 zusammengesetzt ist. Über diese Segmente CB1, CB2 und CB3 laufen die Daten D1 und D2, was mit Hilfe der Pfeile D1B und D2B angedeutet ist. Dabei steht der Zusatz B für den Kommunikationspfad B.

Ferner verläuft in entgegengesetzter Kommunikationsrichtung ein Kommunikationspfad, der aus den Segmenten CR1, CR2 und CR3 zusammengesetzt ist. Über diesen Pfad werden ebenfalls die Daten D1 und D2 gesendet, was durch die Pfeile D2R und D1R angedeutet ist. Dabei steht der Zusatz R für den Kommunikationspfad R.

Die Daten D1 und D2 werden somit über disjunkte Kommunikationspfade an alle im Netzwerk vorliegenden Steuerungskomponenten 201, 301 übermittelt. Jede CPU 202, 203, 302, 303 erhält die kodierten sowie unkodierten Daten D1, D2 über unterschiedliche Kommunikationspfade, nämlich die beiden logischen Ringe mit entgegen gesetzter Kommunikationsrichtung. Eine Verkabelung umfasst dabei einen einzigen Ring. Jede CPU 202, 203, 302, 303 vergleicht die empfangenen Werte für die Daten D1, D2 über einen Kommunikationsweg oder -pfad.

Beispielsweise erhält die CPU 303 über den Kommunikationspfad CB1 die Daten D1B und D2B. Diese werden via der Fuse-Einrichtung 321 am Eingangsport 314 der Switch-Einrichtung 304 angenommen. An dem Sendeport 312 übergibt die Switch-Einrichtung 304 die Daten D1B und D2B, welche am Eingangsport 314 empfangen wurden, an die CPU 303 weiter. Dort kann ein Vergleich der Daten D1B und D2B erfolgen. Sind diese miteinander konsistent, spricht dies für einen fehlerfreien Kommunikationspfad CB1.

Die CPU 303 erhält ferner über den zweiten Kommunikationspfad, der sich aus den Segmenten CR1 und CR2 ergibt, die Daten D1R und D2R. Die Daten D1R und D2R werden von der Switch-Einrichtung 304 via der Fuse-Einrichtung 320 am Empfangsport 310 empfangen und an den Sendeport 312, welcher der CPU 303 zugeordnet ist, ausgegeben. Es kann erneut eine Konsistenzprüfung erfolgen. Darüber hinaus kann die CPU 303 nun einen Vergleich oder Voting der über den Ringpfad CB1 erhaltenen Daten sowie über den Ringpfad CR1 und CR2 erhaltenen Daten durchführen. Im ungestörten Fall sind sowohl die Daten D1R und D2R miteinander konsistent, sowie die Daten D1B und D2B, sowie die über CB1 und über CR1-CR2 empfangenen und einzeln als bereits konsistent festgestellten Daten. Daraus ergibt sich, dass die zu Grunde liegenden Daten D1 und D2, welche von der CPU 2 bzw. 3 erzeugt wurden, korrekt sind. Treten bei den Vergleichen oder den Votings der über CB1 und über CR1-CR2 empfangenen und einzeln als bereits konsistent festgestellten Daten in der Steuerungskomponente 3 bzw. den CPUs 302, 303 Inkonsistenzen auf, kann auf einen Kommunikationsfehler geschlossen werden.

Ähnliche Konsistenzprüfungen erfolgen in der Steuerungskomponente 201 bzw. den CPUs oder Steuereinrichtungen 202, 203. Falls eine der beteiligten Switch-Einrichtungen 4, 5, 204, 205, 304, 305 fehlerhaft arbeiten sollte oder ausfällt, kann ein entsprechender Netzwerkfehler erkannt werden, wenn die Daten D1, D2 wiederholt gesendet werden. In der Regel werden mehrere Kommunikationszyklen mit unterschiedlichen Daten unterschiedlicher Steuereinrichtungen auf dem Netzwerk 6 verschickt. Auf Grund anderer Daten, die in der Fig. 1 nicht dargestellt sind, können die jeweiligen Steuerungskomponenten 201, 301 feststellen, ob ihr eigener Switch 204, 205, 304, 305 defekt ist oder nicht. Insofern können verschiedene Fehlerszenarien erkannt und behandelt werden.

Durch die disjunkten Datenpfade CB1, CB2, CB3 und CR1, CR2, CR3, treten Fehler bei der Übertragung nur unabhängig voneinander auf. Durch die Ausgestaltung als Ethernet-Ring der Netzwerk-Knoten oder Komponenten 100, 201, 301, ist eine weitestgehend konsistente Kommunikation von Steuergeräten, die insbesondere redundante Steuereinrichtungen 2, 3 haben, gewährleistet.

Die eingesetzten Fuse-Einrichtungen 20, 21, 220, 221, 320, 321 sind in der Betriebssituation der Netzwerkanordnung 1, wie sie in Figur 1 dargestellt ist, durchschaltend. Das heißt, die Daten werden nicht blockiert. Dies ist in der Figur durch die zwei parallelen Striche angedeutet.

Es ist möglich, dass Teile einer Netzwerkeinrichtung derart geschädigt sind, dass nur noch nicht interpretierbare, also unbrauchbare Daten erzeugt und in das Netzwerk versendet werden. Man spricht auch von einem Babbling Idiot, also einer Netzwerkeinrichtung, die unbrauchbare Daten erzeugt und ins Netzwerk sendet, wodurch derartige sinnlose Datenpakete die Infrastruktur belasten. Es kann dabei auftreten, dass die Datenpakete mit falschen Adressdaten versendet werden und ausschließlich den Datenverkehr behindern. Bei einem Babbling Idiot ist zudem die Datenrate, mit der entsprechende Datenpakete erzeugt und gesendet werden, meist hoch.

Um auch das Fehler-Szenario eines Babbling Idiot geeignet behandeln zu können, sind die Netzwerkeinrichtungen in der Netzwerkanordnung 1 derart ausgestaltet, dass jede Netzwerkeinrichtung 100, 200, 300 mit einer vorgegebenen maximalen Datentransferrate senden kann. Beispielsweise kann die maximale Datentransferrate ein vorgegebener Prozentsatz der physikalisch maximal möglichen Datentransferrate in dem Kommunikationsnetzwerk sein. Insofern kann bei funktionsfähigen und fehlerfreien Netzwerkeinrichtungen bzw. der Elemente von keinem Sendeport 9, 13 209, 213, 309, 313 eine größere Datenrate abgesetzt werden als die maximal vorgegebene Datenrate. Dies kann über eine entsprechende Programmierung der Netzwerkeinrichtungen 100, 200, 300 erfolgen.

Die Fuse-Einrichtungen, welche als Netzwerksicherungen 20, 21, 220, 221, 320, 321 ausgestaltet sind, lösen aus, wenn die eintreffende Datenrate größer ist als die maximal vorgegebene Datentransferrate. Durch diese Maßnahme kann auch ein Babbling Idiot für das Szenario bewältigt werden.

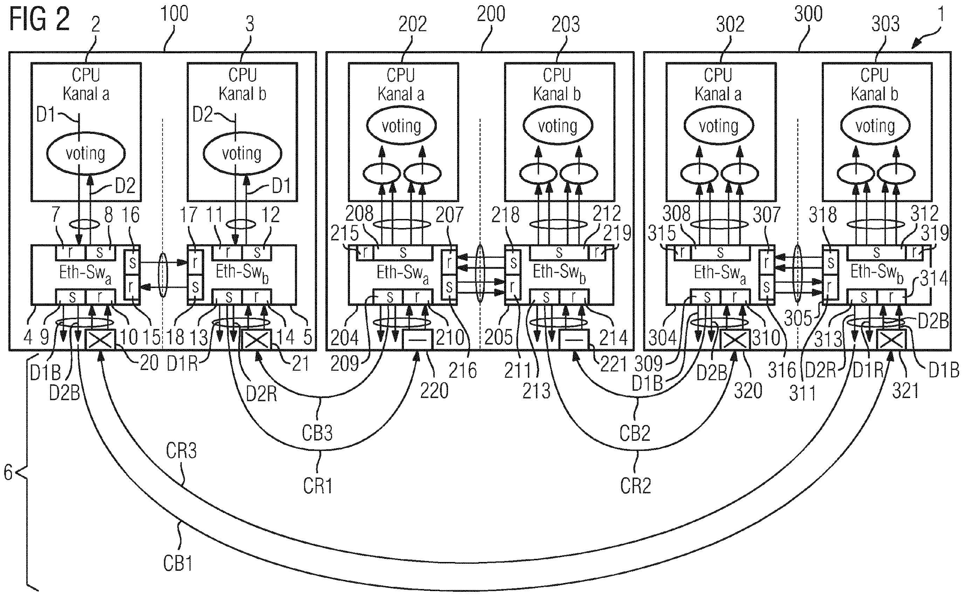

In der Fig. 2 ist beispielsweise angenommen, dass die Switch-Einrichtung 205 derart fehlerhaft ist, dass sie mit unbeschränkter Datenrate, also der maximal möglichen im Netzwerk, sinnlose Datenpakete erzeugt und abschickt. Insofern ist die Netzwerkeinrichtung 200 als ein Babbling Idiot aufzufassen.

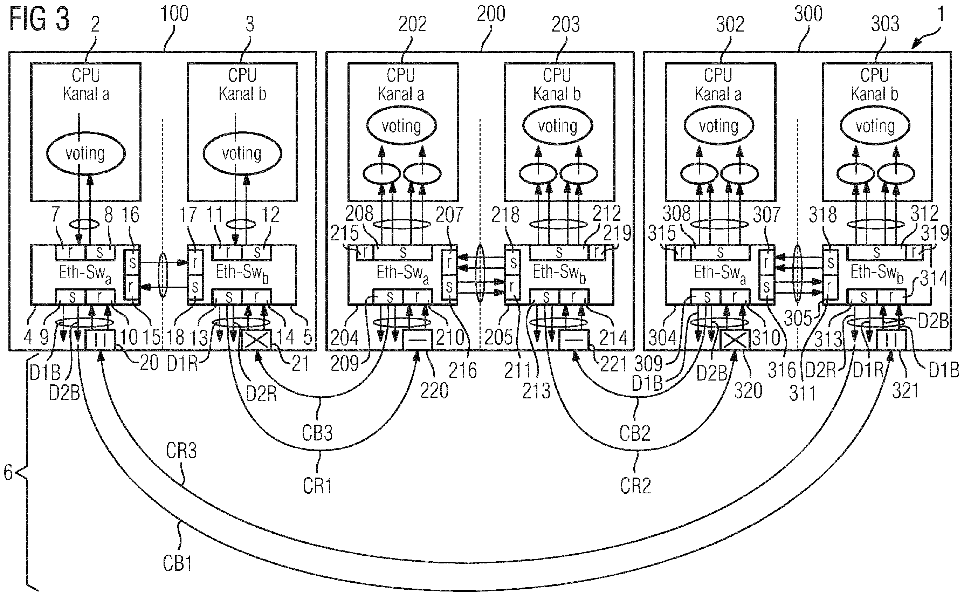

In der Fig. 2 und auch der Fig. 3 ist die in Bezug auf Fig. 1 beschriebene Netzwerkanordnung 1 dargestellt. Da von den Sendeports 213 und 218 der defekten Switch-Einrichtung 205 sinnlose Datenpakete versendet werden, wird das Netzwerk mit diesen sinnlosen Daten gefüllt.

Allerdings erkennen die Fuse-Einrichtungen 20, 21, 320, 321, dass die Datentransferrate über der vorgegebenen maximalen Datentransferrate liegt. D.h., die Fuse-Einrichtungen 20, 21, 320, 321 lösen aus und blockieren für die ihnen zugeordneten Empfangsports 10, 14, 310, 314 den Datenverkehr. Die Fuse-Einrichtungen 220 und 221 einer Netzwerkeinrichtung 200 sind nicht von Interesse. Die ausgelösten Fuse-Einrichtungen 20, 21, 320, 321 sind durch ein Kreuz gekennzeichnet. Die unbeachtlichen Fuse-Einrichtungen 220, 221 sind mit einem waagrechten Strich versehen.

In der Fehlerbetriebssituation, wie sie in der Fig. 2 angedeutet ist, werden von den funktionsfähigen Netzwerkeinrichtungen 100, 300 keine Daten mehr empfangen. Allerdings sind die Netzwerkeinrichtungen eingerichtet, die selbst erzeugten Daten weiterhin zu senden. Beispielsweise sendet die Netzwerkeinrichtung 100 nach wie vor über den Sendeport 9 und 13 Daten D1B, D2B, D1R und D2R in das Netzwerk 6.

Durch das Blockieren des Datenempfangs bzw. Auslösen der Sicherungen 20, 21, 320, 321 sinkt die Datentransferrate an den Fuse-Einrichtungen 20, 321, die nicht direkt mit dem Babbling Idiot 200 gekoppelt sind, wieder unter die vorgegebene maximale Datentransferrate. D.h., in der Folge geben die Sicherungen bzw. Fuse-Einrichtungen 20, 321 den Datenempfang für die ihnen zugeordneten Empfangsports 10, 314 wieder frei. Diese Situation ist in der Fig. 3 dargestellt. Die Sicherungen bzw. Netzwerk-Fuses 21, 320 bleiben jedoch ausgelöst und blockieren.

Man erkennt in der Fig. 3, dass nun erneut ein zuverlässiger Datentransfer zwischen der Netzwerkeinrichtung 100 und 300 möglich ist. Denn die Kommunikationspfade CB1 und CR3 sind von den sinnlosen Datenpaketen, die der Babbling Idiot 200 erzeugt, isoliert. Insofern kann auch beim Auftreten eines Fehlers, bei dem eine Netzwerkeinrichtung oder ihre Elemente sinnlose Daten mit hoher Datenrate in das Netzwerk absenden, behandelt werden. Trotzdem ist eine weitere sichere Kommunikation zwischen allen nicht vollständig defekten Netzwerkeinrichtungen gewährleistet.

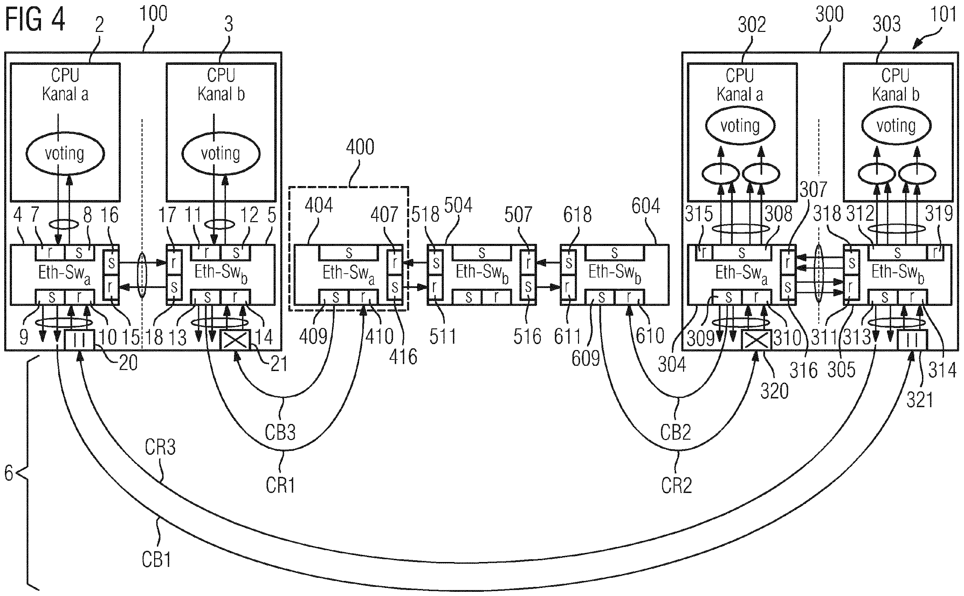

Die Fig. 4 zeigt eine weitere Ausführungsform einer Netzwerkanordnung 101. Im Vergleich zu den Darstellungen der Fig. 1-3 ist die mittlere Netzwerkeinrichtung durch drei einfache Switch-Einrichtungen 404, 504, 604, welche seriell miteinander gekoppelt sind, ausgetauscht. Die Switch-Einrichtungen 404, 504, 604 können auch als ungesicherte Netzwerkeinrichtung aufgefasst werden. Beispielsweise ist die Switch-Einrichtung 404 Teil einer derartigen ungesicherten Netzwerkeinrichtung 400. Beispielsweise sind für besonders sicherheitsunkritische Anwendungen entsprechende einfache, nicht redundant aufgebaute Netzwerkeinrichtungen in einem Fahrzeug eingesetzt.

Die einfachen Switch-Einrichtungen 404, 504, 604 sind untereinander über Sende- und Empfangsports 407, 416, 504, 511, 507, 516, 611, 618 gekoppelt. Die Switch-Einrichtung 404 hat einen Sendeport 409 und einen Empfangsport 410, welcher an das Kommunikationsnetzwerk, also das Ethernet 6, gekoppelt sind. Die Switch-Einrichtung 604 hat einen Sendeport 609 und einen Empfangsport 610, welche ebenfalls an das Kommunikationsnetzwerk 6 gekoppelt sind. Es ergeben sich Kommunikationspfadsegmente CB1, CB2, CB3 und CR1, CR2, CR3, wie bereits in den Fig. 1-3 angedeutet ist. Die Empfangsports 10, 14, 310, 314, welche zu den Switch-Einrichtungen 4, 5, 304, 305 der Netzwerkeinrichtungen 100, 200 gehören, sind über Fuse-Einrichtungen 20, 21, 320, 321 an das Netzwerk 6 gekoppelt.

Sofern nun eine der einfachen Switch-Einrichtungen 404, 504, 604 ein Babbling Idiot wird, steigt die Datenrate zunächst im gesamten Netzwerk an und übersteigt die vorgegebene maximale Datentransferrate an den Empfangsports. Die Fuse-Einrichtungen 21 und 320 blockieren dann den Datenempfang für die Ports 14 und 310. In der Folge wird der Strang aus Switch-Einrichtungen 404, 504, 604 von der Datenkommunikation abgekoppelt. Die Fuse-Einrichtungen 20, 321, welche den Datentransfer zu den Empfangsports 310, 314 kontrollieren, schalten jedoch durch. Insofern ist auch bei Unregelmäßigkeiten der ungesicherten Netzwerkeinrichtung 4 bzw. auch der Switch-Einrichtung 504, welche ein Babbling Idiot ist, gewährleistet. Zwischen den funktionierenden sicherheitsrelevanten Netzwerkeinrichtungen 100, 300 ist nach wie vor über die Sende- und Empfangsports 9, 10, 313, 314 eine Kommunikation möglich.

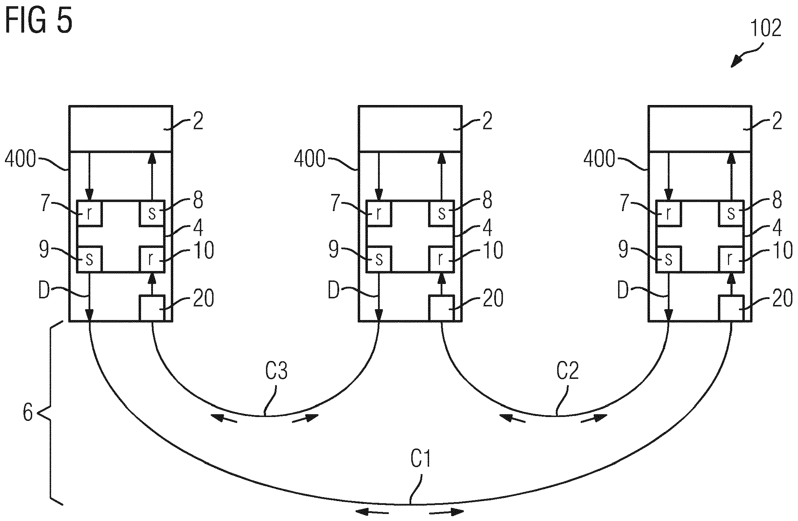

Die Fig. 5 zeigt eine weitere Ausführungsform für eine Netzwerkanordnung. Die Netzwerkanordnung 102 umfasst dabei einfache Netzwerkeinrichtungen 400, die jeweils nur eine Steuereinrichtung 2 und eine Switch-Einrichtung 4 haben. Die Switch-Einrichtung hat jeweils einen an das Kommunikationsnetzwerk 6 gekoppelten Empfangsport 10 und Sendeport 9 zum Aus- bzw. Einkoppeln von Daten D. Ferner ist die Steuereinrichtung oder CPU 2 über Sende- und Empfangsports 8, 7 mit der Switch-Einrichtung kommunikativ verbunden. Den Empfangsports 10 sind Fuse-Einrichtungen 20 zugeordnet, die bei Überschreiten einer festgelegten maximalen Empfangsdatenrate einen Datentransfer vollständig blockieren. Die Netzwerkanordnung wird dabei wie bereits zuvor beschrieben betrieben.

Somit liefert das Verfahren sowie auch die vorgeschlagene Netzwerkanordnung mit ihrer Ringstruktur und einer Überwachung der Datentransferrate an den Empfangsports der Netzwerkeinrichtungen eine höchst konsistente und zuverlässige Steuergerätekommunikation in sicherheitsrelevanten Anwendungen. Alle möglichen Einzelfehler führen entweder nicht dazu, dass in einer oder mehreren Netzwerkeinrichtungen keine konsistenten Daten erzeugt werden können, oder können innerhalb eines Kommunikationszyklus lokalisiert werden. Außerdem kann die Störung einer Netzwerkeinrichtung als Babbling Idiot, also unkontrolliertem Versenden von Daten mit hoher Datenrate in das Netzwerk, nicht zu einem Ausfall der Kommunikation führen.

Die vorgeschlagene Netzwerkanordnung ermöglicht insbesondere, dass auch ungeschützte Netzwerkeinrichtungen mit jeweils mindestens einer Steuereinrichtung und mindestens einer Switch-Einrichtung in der Netzwerkanordnung vorgesehen sein können. Die ungeschützten Netzwerkeinrichtungen verfügen an den Empfangsports zum Beispiel nicht über Fuse-Einrichtungen, sie sind herkömmliche Ethernet-Geräte. Die ungeschützten Netzwerkeinrichtungen können dennoch den zuverlässigen Verkehr nicht stören, da sie über die Fuse-Einrichtungen der nächsten geschützten, also mit einer Fuse-Einrichtung versehenen, Netzwerkeinrichtung abgetrennt werden, wenn eine der ungeschützten Netzwerkeinrichtungen ein Babbling Idiot wird.

In einer weiteren Ausführungsform könnte die oben beschriebene Ausführungsform auch in einem Netzwerk mit beliebiger Netzwerktopologie zur Anwendung kommen, wenn die Traffic-Patterns in diesem Netzwerk bekannt sind.

Eine alternative Ausführungsform besteht darin, anstatt die Bandbreite an den Eingangsports zu messen, die Verweildauer, d.h. die Wartezeit, hochpriorer Pakete in der Netzwerkeinrichtung zu messen. Wenn die Verweildauer ein berechnetes Höchstmaß überschreitet, kann daraus gefolgert werden, dass die zulässige Bandbreite überschritten wurde und die Fuse (Sicherung) kann auslösen.

Die beschriebene Fuse (Sicherung oder Netzwerk-Sicherung) kann entweder direkt im Switch ASIC realisiert werden, wenn dieser Rate-Limiting und Rate-Monitoring bzw. Stream-Sensitives Rate Monitoring unterstützt. Dadurch ist es möglich, die Netzwerk-Sicherungen ohne zusätzliche Hardware zu realisieren.

Alternativ kann die Netzwerk-Sicherung in zusätzlichen Komponenten, z.B. FPGAs, realisiert werden, die den externen Eingängen der Netzwerkeinrichtungen vorgeschaltet werden. Dadurch können einfachere Switches verwendet werden, gleichzeitig vereinfacht die Realisierung der Netzwerk-Sicherungen in eigenständiger Hardware gegebenenfalls eine Zertifizierung.

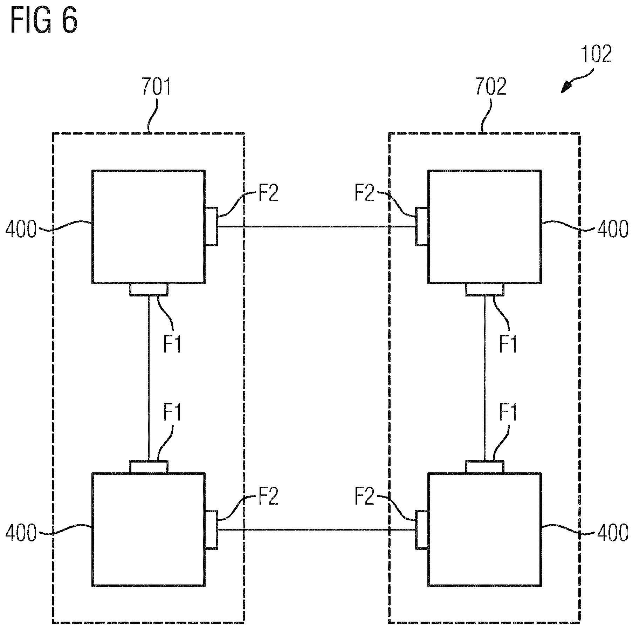

In Fig. 6 ist eine schematische Darstellung einer vierten Ausführungsform einer Netzwerkanordnung 102 abgebildet. Die Netzwerkanordnung 102 weist vier Netzwerkeinrichtungen 400 auf. Die jeweilige Netzwerkeinrichtung 400 kann auf einem der Ausführungsbeispiele der Fig. 1-5 basieren. Die Netzwerkeinrichtungen 400 können unterschiedliche Funktionalitäten aufweisen. Beispielsweise können die beiden oberen Netzwerkeinrichtungen 400 der Fig. 6 als Steuerrechner und die beiden unteren Netzwerkeinrichtungen 400 als Aktuatoren ausgebildet sein. Die linken Netzwerkeinrichtungen 400 sind Teil eines ersten Netzwerksegmentes 701. Demgegenüber sind die rechten Netzwerkeinrichtungen 400 Teil eines zweiten Netzwerksegmentes 702.

Im Mittenbereich (Innenbereich) des jeweiligen Netzwerksegmentes 701, 702 sind erste Fuse-Einrichtungen F1 angebracht, welche einen größeren Schwellwert für die Datenübertragungsrate haben als diejenigen Fuse-Einrichtungen F2, welche im Randbereich des jeweiligen Netzwerksegmentes 701, 702 angeordnet sind. Demnach sind die ersten Fuse-Einrichtungen mit dem höheren Schwellwert F1 für die interne Kommunikation in dem jeweiligen Netzwerksegment 701, 702 vorgesehen. Demgegenüber sind die Fuse-Einrichtungen F2 mit dem niedrigeren Schwellwert für die Datenübertragungsrate für die externe Kommunikation zwischen den Netzwerksegmenten 701, 702 vorgesehen.

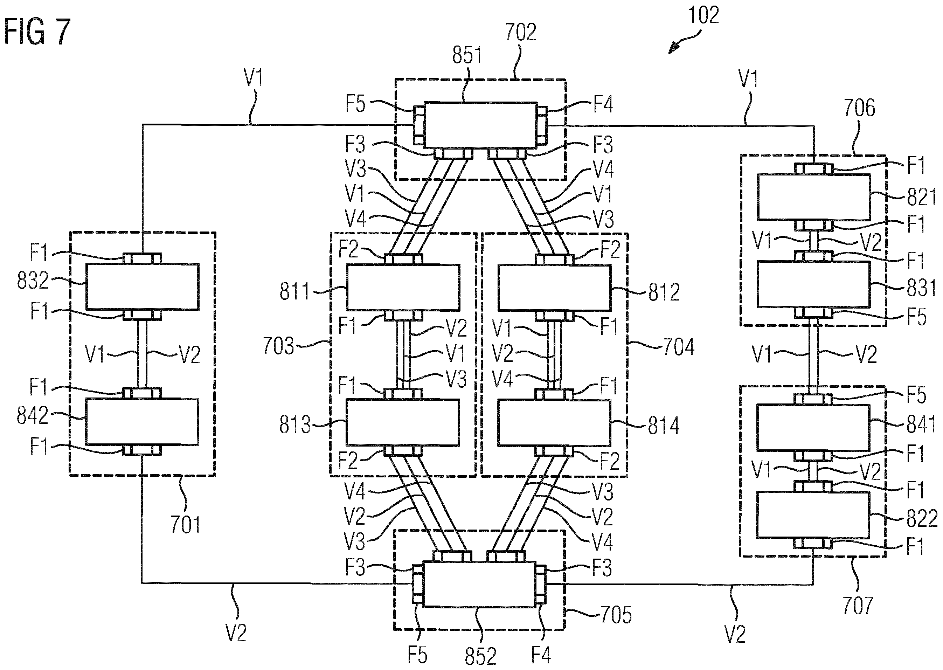

Fig. 7 zeigt eine schematische Darstellung einer fünften Ausführungsform einer Netzwerkanordnung 102.

Die Netzwerkanordnung 102 der Fig. 7 hat zwölf Netzwerkeinrichtungen 811-814, 821-822, 831-832, 841-842, 851-852 unterschiedlicher Funktionalität. Die Netzwerkeinrichtungen 811-814 sind als Steuerrechner ausgebildet. Die Netzwerkeinrichtungen 821-822 bilden einen Knoten eines ersten Typs aus, die Netzwerkeinrichtungen 831, 832 einen Knoten eines zweiten Typs und die Netzwerkeinrichtung 841, 842 einen Knoten eines dritten Typs. Die Netzwerkeinrichtungen 851, 852 sind als Kopplungs-Switches ausgebildet.

Ferner hat die Netzwerkanordnung 102 vier implementierte virtuelle Netze V1-V4. Dabei ist in der Fig. 7 durch die Bezugszeichen V1-V4 dargestellt, welche virtuellen Leitungen zu welchem virtuellen Netz V1-V4 gehören.

Ferner sind in der Netzwerkanordnung 102 fünf verschiedene Fuse-Einrichtungen F1-F5 mit unterschiedlichen Schwellwerten verwendet. Die erste Fuse-Einrichtung F1 hat beispielsweise einen Schwellwert von 80% der vorgegebenen maximalen Datenübertragungsrate der Netzwerkanordnung 102, F2 von 50%, F3 von 35%, F4 von 20% und F5 von 10%.

Die Netzwerkanordnung 102 ist als ein dreifach ringförmiges Netzwerk ausgebildet, man könnte auch von einem inneren Ring mit äußeren Ringen oder Schlaufen sprechen. Ein innerer Ring ist mit den Steuerrechnern 811-814 gebildet, zwei äußere Ringe sind mit den Knoten 821-822, 831-832 und 841-842 gebildet. Durch die virtuellen Verbindungen V1-V4 werden auf Basis der ringförmigen Topologie zwei disjunkte, loop-freie Pfade zwischen allen Steuerrechnern 811-814 untereinander und zwischen den Steuerrechnern und Knoten gebildet.

In der Ausführungsform der Fig. 7 sind alle Netzwerkeinrichtungen redundant vorhanden, so gibt es z.B. einen Knoten 821, welcher redundant zu dem Knoten 822 ist. Entsprechend ist der Knoten 831 redundant zum Knoten 832, und der Knoten 841 redundant zum Knoten 842. Wenn einer dieser Knoten ausfällt, bleibt das Gesamtsystem der Netzwerkanordnung 102 funktionsfähig. Die Einerstelle in den dreistelligen Bezugszeichen der Netzwerkeinrichtungen 811-814, 821-822, 831-832, 841-842 und 851-852 kann auf unterschiedliche Stromkreise zur Stromversorgung hindeuten. Würde dann eine Stromversorgung ausfallen, wird von jedem Paar redundanter Knoten eines gleichen Typs einer mit Strom versorgt und an die Netzwerkanordnung 102 angebunden. Die Segmente 701-707 sind entsprechend so gewählt, dass bei der Abtrennung eines Segmentes 701-707 von jedem Paar redundanter Knoten mindestens einer an das Kommunikationsnetz 102 angebunden bleibt.

D.h., falls zwei redundante Knoten, beispielsweise die Knoten 821 und 822, in einem äußeren Ring installiert sind, müssen zwischen diesen Fuse-Einrichtungen mit geringeren Schwellwerten installiert seien. Vorliegend sind das die Fuse-Einrichtung F5 mit 10% der vorgegebenen maximalen Datenübertragungsrate des Kommunikationsnetzwerkes 102.

Durch die Verwendung der vier virtuellen Netze V1-V4 ist es möglich, dass ein Datenpaket, das über einen der Kopplungs-Switches 851, 852 in den äußeren oder inneren Ring eingespeist wurde, niemals diesen Ring durch den anderen Kopplungs-Switch 852, 851 wieder verlässt. Um dennoch zwei disjunkte Pfade zwischen allen Knoten zu ermöglichen, werden die beschriebenen vier virtuellen Netze V1-V4 eingesetzt.

Die Funktion der Fuse-Einrichtungen F1-F5 oder Fuses in der Ausführungsform der Fig. 7 wird durch folgendes Beispiel verdeutlicht. In diesem Beispiel wird angenommen, dass der Knoten 822 der Babbling Idiot ist.

Hierbei können folgende Fälle Fall 1 bis Fall 4 differenziert werden:
Fall 1:
   Der Knoten 822 babbelt mit einer Bandbreite von bis zu 9%-ε. Dieses Babbeln mit geringer Bandbreite wird von keiner Fuse F1-F5 erkannt. Der Knoten 841 fügt zu den Datenpaketen, die der Knoten 822 nach oben zum Knoten 841 schickt, noch seine geplante Bandbreite, beispielsweise 1%, hinzu. Dennoch wird kein Schwellwert überschritten. Die verwendeten 9% Bandbreite führen zu keiner Beeinträchtigung des Gesamtsystems der Netzwerkanordnung 102.
Fall 2:
   Der Knoten 822 babbelt mit einer Bandbreite von 9%+ε bis 20%-ε: Der Knoten 841 fügt seinen geplanten Anteil von 1% hinzu, der die Fuse-Einrichtung F5 des Knotens 831 auslöst. Dann ist der Knoten 822 als defekt anzunehmen. Der Knoten 841 ist nicht defekt, wird aber von der Kommunikation getrennt und ist damit verloren. Die Verbindung über den Pfad V1 ist durch die Fuse-Einrichtung F5 unterbrochen, die Verbindung über den Pfad V2 ist durch den defekten Knoten 822 unterbrochen.
Fall 3:
   Der Knoten 822 babbelt mit einer Bandbreite von 20% bis 80%-ε: Zusätzlich zu der Fuse F5 an dem Knoten 831 löst die Fuse F2 an dem Kopplungs-Switch 852 aus. Das Segment 707 bestehend aus den Knoten 821 und 841 ist dann von der Kommunikation abgetrennt. Der Rest des Kommunikationsnetzes 102 ist nicht beeinträchtigt. Damit geht lediglich die Redundanz im rechten äußeren Ring verloren.
Fall 4:
   Der Knoten 822 babbelt mit einer Bandbreite von mehr als 80%: Die Fuse F2 an dem unteren Kopplungs-Switch 852 und die Fuse F1 an dem Knoten 841 lösen aus. Damit ist der Knoten 822 von der Kommunikation abgetrennt, der Rest des Kommunikationsnetzes 102 ist nicht beeinträchtigt, und lediglich die Redundanz im rechten äußeren Knoten ist verloren. Auch der Knoten 841 ist nicht verloren. Hätte man die Fuse F1 am Knoten 841 weggelassen, würde sich der gleiche Zustand wie in Fall 3 einstellen. Die Fuses in den Mittenbereichen der Segmente verbessern lediglich die Verfügbarkeit einzelner Knoten und sind nicht unbedingt notwendig.

Das folgende zweite Beispiel basiert auf der Annahme, dass der Steuerrechner 811 der Babbling Idiot ist:
Auch hier können vier Fälle 1 bis 4 unterschieden werden:
   Fall 1:
      Der Steuerrechner 811 babbelt mit einer Bandbreite von bis zu etwa 22,5%-ε. Der Steuerrechner 813 fügt die für ihn vorgesehene Bandbreite von beispielsweise 12,5% hinzu. Die Fuses F3, F2, F1 an den Kopplungs-Switches 851, 852 lösen nicht aus. Möglicherweise kann eine der Fuses F5 zwischen den Knoten 831 und 841 auslösen, da hier eine geringere zulässige Bandbreite eingestellt ist. Dieser Effekt führt aber nicht zum Verlust eines Knotens. Die Fuses, die die äußeren Ringe vom gegenüberliegenden Kopplungs-Switch trennen könnten, lösen nicht aus, da die auf den äußeren Ring gesendeten Datenpakete dem VLAN V1 oder dem VLAN V2 angehören müssen. Keinesfalls werden Datenpakete, die über den einen Kopplungs-Switch 851, 852 gesendet wurden, von dem anderen Kopplungs-Switch 852, 851 empfangen, da dieser immer dem anderen VLAN V1 oder V2 angehört. Es werden also kein Knoten und kein Steuerrechner 811-814 von der Kommunikation ausgegrenzt.
   Fall 2:
      Der Steuerrechner 811 babbelt mit einer Bandbreite von ca. 22,5% bis 35%-ε: Der Steuerrechner 813 fügt die für ihn vorgesehene Bandbreite von beispielsweise 12,5% hinzu. Die Fuse F3 an dem Kopplungs-Switch 852 löst aus. Die gegenüberliegende Fuse F3 am gegenüberliegenden Kopplungs-Switch 851 löst nicht aus. Im schlechtesten Fall babbelt der Steuerrechner 811 in dieser Richtung auf dem VLAN V4. In diesem Fall könnte die Fuse F3 an der Verbindung zwischen Steuerrechner 814 und Kopplungsswitch 852 auslösen, nachdem die Steuerrechner 812 und 814 ihre Daten hinzugefügt haben. Damit wären noch die Steuerrechner 812 und 814 verfügbar, werden aber nicht mehr redundant an die äußeren Ringe angebunden. Eine nicht redundante Anbindung an alle Knoten wäre aber noch vorhanden. Eine zusätzliche Begrenzung der Bandbreite für die VLANs V3 und V4 des inneren Rings könnte diesen Fall dahingehend verbessern, dass eine redundante Ankopplung der Steuerrechner 811-814 aufrechterhalten wird, da ein Auslösen der Fuse F3 an dem Kopplungs-Switch 852 verhindert werden könnte.
   Fall 3:
      Der Steuerrechner 811 babbelt mit einer Bandbreite von mehr als 35%: Die linken Fuses F3 der Kopplungs-Switches 851, 852 lösen aus, die Steuerrechner 811 und 813 sind verloren, aber die Steuerrechner 812 und 814 bleiben redundant angebunden.
   Fall 4:
      Der Steuerrechner 811 babbelt mit einer Bandbreite von mehr als 80%. Die Fuse F1 zwischen dem Steuerrechner 811 und dem Steuerrechner 813 löst aus. Damit wird der Steuerrechner 811 ausgegrenzt, die weiteren Steuerrechner 812 bis 814 bleiben aber voll angebunden.

Das folgende weitere Beispiel basiert auf der Annahme, dass der Kopplungs-Switch 851 der Babbling Idiot ist. Auch hier können vier Fälle 1-4 unterschieden werden:
Fall 1:
   Der Kopplungs-Switch 851 babbelt mit einer Bandbreite von weniger als 8%: Die Knoten 821 und 831 fügen ihre geplante Bandbreite, beispielsweise je 1%, hinzu. Die Fuse F5 an dem Knoten 841 löst nicht aus. Die Fuses F4 und F5 des unteren Kopplungs-Switches 852 lösen ebenfalls nicht aus, da der obere Kopplungs-Switch 851 nur auf dem VLAN V1 babbeln kann, diese Datenpakete vom unteren Kopplungs-Switch 852 aber nicht angenommen werden. Im inneren Ring lösen keine Fuses aus, es werden allerdings ca. 8% Bandbreite vergeudet.
Fall 2:
   Der Kopplungs-Switch 851 babbelt mit einer Bandbreite von 8% bis 10%-ε: Die Knoten 821, 831 fügen ihre jeweilige geplante Bandbreite hinzu. Die Fuse F5 des Knotens 841 löst aus. Die Knoten 821 und 832 werden vom restlichen Kommunikationsnetz 102 getrennt. Die Fuses F4 und F5 des unteren Kopplungs-Switches 852 lösen nicht aus, da der obere Kopplungs-Switch 851 nur auf dem VLAN V1 babbeln kann. Demnach werden Datenpakete von dem oberen Kopplungs-Switch 851 an dem unteren Kopplungs-Switch 852 nicht angenommen. Im inneren Ring lösen keine Fuses aus. Es werden allerdings ca. 10% Bandbreite vergeudet.
Fall 3:
   Der obere Kopplungs-Switch 851 babbelt mit einer Bandbreite von 10% bis 50%-ε: Damit löst die Fuse F5 des Knotens 841 aus. Die Knoten 821 und 831 werden vom restlichen Kommunikationsnetz 102 getrennt. Die Fuses F4 und F5 des unteren Kopplungs-Switches 852 lösen nicht aus, da der obere Kopplungs-Switch 851 nur auf dem VLAN V1 babbeln kann, diese Datenpakete aber vom unteren Kopplungs-Switch nicht angenommen werden.

   Die Steuerrechner 811-814 fügen jeweils ihre geplante Bandbreite von 12,5% hinzu. Am unteren Kopplungs-Switch 852 würden die beiden Fuses F3 auslösen, wenn der obere Kopplungs-Switch 851 auf seinem linken Port auf dem VLAN V3, auf dem rechten Port auf dem VLAN V4 babbelte. In diesem sehr unwahrscheinlichen Fall wären alle Steuerrechner 811-814 verloren.
   In diesem Fall haben die vom oberen Kopplungs-Switch 851 erzeugten Datenpakete, welche durch das Segment 704 hindurchgeleitet wurden, zum Auslösen der rechten Fuse F3 des Kopplungs-Switches 852 und somit zur Abtrennung diese eigentlich intakten Segmentes 704 geführt. Um diesen schlechtesten Fall zu vermeiden, ist die Bandbreite für die VLANs V3 und V4 begrenzt. Über die VLANs V1 und V2 kann der obere Kopplungs-Switch 851 nicht zu einer Auslösung der Fuses F3 des unteren Kopplungs-Switches 852 führen, da diese nicht durch die Steuerrechner 811-814 hindurch weitergeleitet werden.
   Alternativ könnte auf die VLANs V3 und V4 verzichtet werden, wodurch nicht mehr zwischen allen Steuerrechnern 811-814 disjunkte Pfade existieren würden, was bei geeigneter Verteilung der Steuerungsfunktionen auf die Steuerrechner 811-804 toleriert werden könnte. Dafür müssten keine Datenpakete durch die Steuerrechnersegmente 703, 704 durchgeleitet werden.
Fall 4:
   Der obere Kopplungs-Switch 851 babbelt mit einer Bandbreite von mehr als 50%: Die Fuse F5 des Knotens 841 löst damit aus. Die Knoten 821 und 831 werden vom restlichen Kommunikationsnetz 102 getrennt. Die Fuses F4 und F5 des unteren Kopplungs-Switches 852 lösen nicht aus, da der obere Kopplungs-Switch 852 nur auf dem VLAN V1 babbeln kann, diese Datenpakete aber vom unteren Kopplungs-Switch 852 nicht angenommen werden.

Die Fuses F2 der Steuerrechner 811, 812 lösen aus. Es dringt kein gebabbelter Verkehr in den inneren Ring bestehend aus den Segmenten 703, 704.

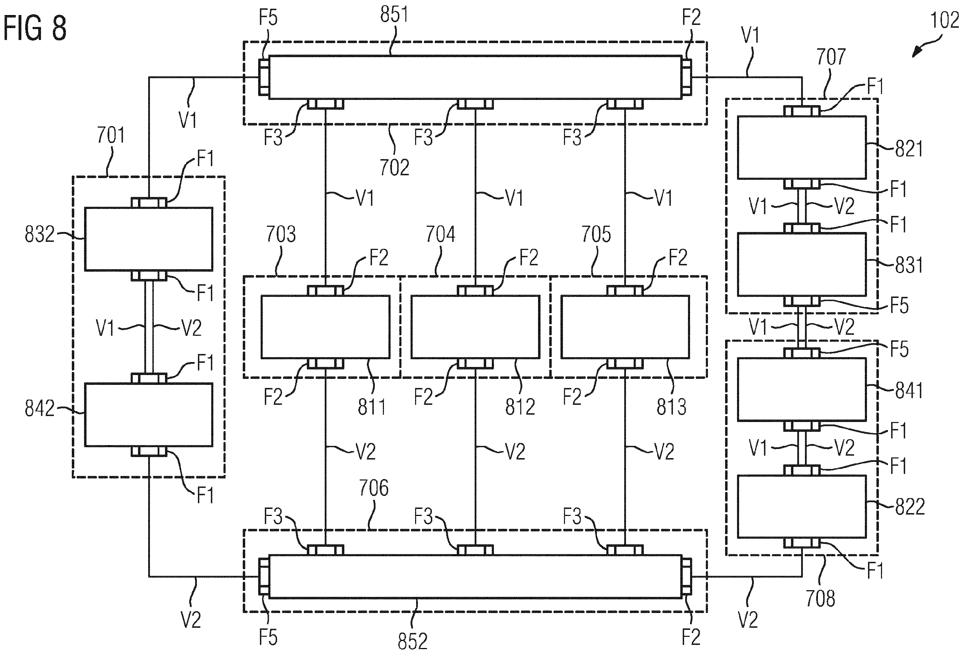

In Fig. 8 ist eine schematische Darstellung einer sechsten Ausführungsform einer Netzwerkanordnung 102 gezeigt. Das Ausführungsbeispiel der Fig. 8 unterscheidet sich von dem Ausführungsbeispiel der Fig. 7 insbesondere in der Netzwerktopologie. Insbesondere sind in der Ausführungsform der Fig. 8 nur zwei VLANs V1, V2 implementiert. Durch die beiden VLANs V1, V2 kann ein Paket, das über einen der Kopplungs-Switches 851, 852 in den äußeren Ring eingespeist wurde, niemals diesen Ring durch den anderen Kopplungs-Switch 852, 851 wieder verlassen. Damit wird dieses Datenpaket also nicht durch den äußeren Ring hindurchgeleitet. Um dennoch zwei disjunkte Pfade zwischen allen Knoten des Kommunikationsnetzes 102 zu ermöglichen, werden die zwei beschriebenen VLANs V1, V2 eingesetzt.

Die Funktion der Fuses F1-F5 kann durch folgende drei Beispiele verdeutlicht werden:
Das erste Beispiel basiert auf der Annahme, dass der Knoten 822 der Babbling Idiot ist. In diesem ersten Beispiel können vier Fälle unterschieden werden:
   Fall 1:
      Der Knoten 822 babbelt mit einer Bandbreite von bis zu 9%-ε: Dieses Babbeln mit geringer Bandbreite wird von keiner Fuse F1-F5 erkannt. Der Knoten 841 fügt zu den Datenpaketen, die der Knoten 822 nach oben schickt noch seine geplante Bandbreite, beispielsweise 1%, hinzu. Dennoch wird kein Schwellwert einer Fuse F1-F5 überschritten. Die verwendeten 9% Bandbreite führen zu keiner Beeinträchtigung des Gesamtsystems der Netzwerkanordnung 102.
   Fall 2:
      Der Knoten 822 babbelt mit einer Bandbreite von 9%+ε bis 20%-ε: Der Knoten 841 fügt seinen geplanten Anteil von 1% hinzu, die Fuse F5 bei dem Knoten 831 löst aus. Der Knoten 822 ist als defekt anzunehmen, der Knoten 841 ist nicht defekt, wird aber von der Kommunikation getrennt und ist damit verloren. Die Verbindung über dem Pfad V1 ist durch die Fuse F5 unterbrochen, die Verbindung über den Pfad V2 ist durch den defekten Knoten 822 unterbrochen.
   Fall 3:
      Der Knoten 822 babbelt mit einer Bandbreite von 20% bis 80%-ε: Zusätzlich zu der Fuse F5 löst die Fuse F4 an dem unteren Kopplungs-Switch 852 aus. Das Segment 708 aus den Knoten 822 und 841 ist von der Kommunikation abgetrennt, der Rest des Kommunikationsnetzes 102 ist nicht beeinträchtigt. Lediglich die Redundanz im rechten äußeren Ring ist verloren.
   Fall 4:
      Der Knoten 822 babbelt mit einer Bandbreite von mehr als 80%: Die Fuse F4 des unteren Kopplungs-Switches 852 und die Fuse F1 an dem Knoten 841 lösen aus. Damit ist lediglich der Knoten 822 von der Kommunikation abgetrennt, der Rest des Kommunikationsnetzes 102 ist nicht beeinträchtigt. Lediglich die Redundanz im rechten äußeren Ring ist verloren. Allerdings ist der Knoten 841 nicht verloren.

Bei dem folgenden zweiten Beispiel wird angenommen, dass der Steuerrechner 811 der Babbling Idiot ist. Hier können zwei Fälle unterschieden werden:
Fall 1:
   Der Steuerrechner 811 babbelt mit einer Bandbreite von bis zu 35%-ε. Die Fuses F3 an den Kopplungs-Switches 851, 852 lösen nicht aus. Möglicherweise lösen eine oder beide der Fuses F5 zwischen den Knoten 831 und 841 aus, da hier die geringere zulässige Bandbreite (10%) eingestellt ist. Dieser Effekt ist unerwünscht, führt aber nicht zum Verlust eines Knotens.

   Die Fuses, welche die äußeren Ringe vom gegenüberliegenden Kopplungs-Switch 851 trennen könnten, lösen nicht aus, da die auf den äußeren Ring gesendeten Datenpakete dem VLAN V1 oder dem VLAN V2 angehören müssen. Keinesfalls werden Datenpakete, die über einen Kopplungs-Switch 851, 852 gesendet wurden, von dem anderen Kopplungs-Switch 852, 851 empfangen, da dieser immer dem anderen VLAN V2, V1 angehört. Es werden also keine Knoten und kein Steuerrechner 811-813 von der Kommunikation ausgegrenzt.
Fall 2:
   Der Steuerrechner 811 babbelt mit einer Bandbreite von mehr als 35%: Die Fuses F3 der Kopplungs-Switches 851, 852, die an den Steuerrechner 811 angekoppelt sind, lösen aus. Damit wird der Steuerrechner 811 vom Kommunikationsnetz 102 getrennt. Alle anderen Knoten bleiben aber redundant verbunden.

Das folgende dritte Beispiel basiert auf der Annahme, dass der obere Kopplungs-Switch 851 der Babbling Idiot ist: In diesem Beispiel können drei Fälle differenziert werden:
Fall 1:
   Der obere Kopplungs-Switch 851 babbelt mit einer Bandbreite von weniger als 8%. Die Knoten 821 und 833 fügen ihre geplante Bandbreite, beispielsweise je 1%, hinzu. Damit löst die Fuse F5 an dem Knoten 841 nicht aus. Die Fuses F2 und F1 des unteren Kopplungs-Switches 852 lösen ebenfalls nicht aus, da der obere Kopplungs-Switch nur auf dem VLAN V1 babbeln kann, diese Datenpakete aber vom unteren Kopplungs-Switch 852 nicht angenommen werden. Die Fuses F3 des unteren Kopplungs-Switches 852 lösen ebenfalls nicht aus, da Datenpakete des VLAN V1 nicht von den Steuerrechner 811-813 an den unteren Kopplungs-Switch 852 weitergeleitet werden. Damit bleiben alle Knoten über das VLAN V2 miteinander verbunden.
Fall 2:
   Der obere Kopplungs-Switch 851 babbelt mit einer Bandbreite von 8% bis 50%-ε: Die Knoten 821 und 831 fügen ihre geplante Bandbreite hinzu. Die Fuse F5 des Knotens 841 löst aus. Damit werden die Knoten 821 und 831 vom restlichen Kommunikationsnetz 102 getrennt. Die Fuses F2 und F1 des unteren Kopplungs-Switches 852 lösen nicht aus, da der obere Kopplungs-Switch 851 nur auf dem VLAN V1 babbeln kann, diese Datenpakete aber von dem unteren Kopplungs-Switch 852 nicht angenommen werden. Die Fuses F3 des unteren Kopplungs-Switches 852 lösen ebenfalls nicht aus, da Datenpakete des VLANs V1 nicht von den Steuerrechnern 811-813 an den unteren Kopplungs-Switch 852 weitergeleitet werden.
Fall 3:
   Der obere Kopplungs-Switch 851 babbelt mit einer Bandbreite von mehr als 50%: Die Fuses F2 an den Knoten 821 und 832 lösen aus. Des Weiteren lösen auch die Fuses F2 der Steuerrechner 811-813 aus. Der obere Kopplungs-Switch 851 ist damit von dem Kommunikationsnetz 102 abgetrennt. Alle Knoten bleiben aber über das VLAN V2 nicht redundant miteinander verbunden. Hierbei werden die Kopplungs-Switche 851, 852 nicht zu den Knoten gezählt.

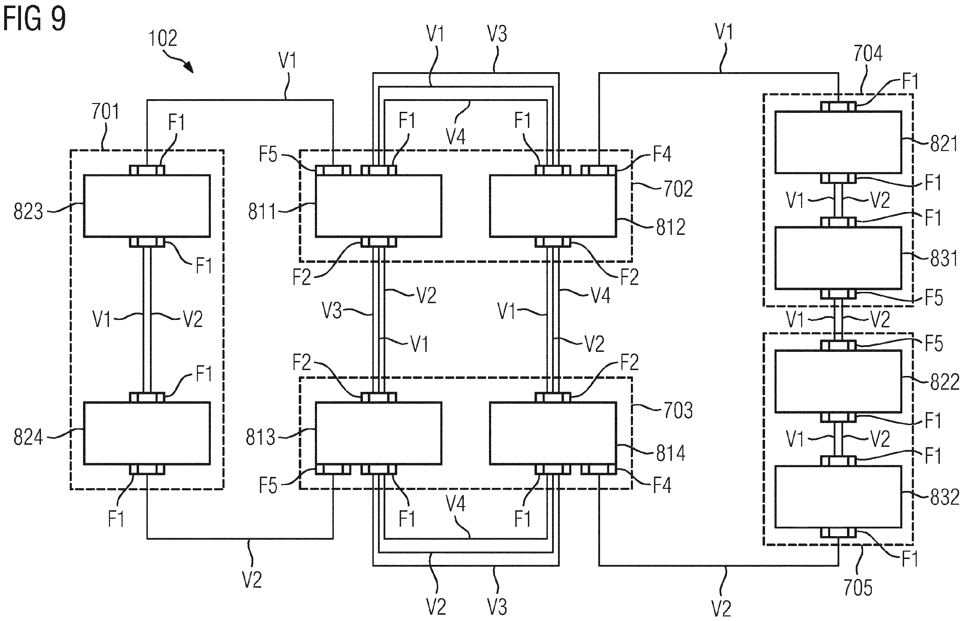

Fig. 9 zeigt eine schematische Darstellung einer siebten Ausführungsform einer Netzwerkanordnung 102.

Die Fuses F1-F5 verhindern, dass ein Babbling Idiot die Möglichkeit hat, einen oder mehrere der Ringe der Netzwerkanordnung 102 mit sinnlosen Daten zu fluten. Dazu überwachen die Fuses F1-F5 den insbesondere eingehenden hochprioren Datenverkehr an den Außen-Anbindungen des Plattformcomputers 811-814, d.h. an den Außenring-Links der Steuerrechner 811-814. So können Babbling Idiots in den Außenringen aus den Segmenten 701, 704, 705 nicht die Kommunikation im inneren Ring aus den Segmenten 702, 703 stören. Falls redundante und mindestens bzgl. Kommunikation hochverfügbare Netzwerkeinrichtungen, zum Beispiel Aggregate, in einem Außenring installiert sind, müssen zwischen diesen ebenfalls Fuses F1-F5 in beiden Richtungen angebracht werden. Ein Beispiel hierfür sind die Fuses F5 der Netzwerkeinrichtungen 831 und 822.

Ebenfalls überwacht werden die Links des inneren Rings der Segmente 702, 703, welche die Steuerrechner 811 bis 814 mit verschiedenen Stromversorgungen verbinden. So sind beispielsweise die Steuerrechner 811 und 812 mit einer ersten Stromversorgung versorgt, wohingegen die Steuerrechner 813 und 814 mit einer zweiten Stromversorgung versorgt sind.

Insgesamt versorgt die erste Stromversorgung die Netzwerkeinrichtungen 811, 812, 821, 831, 822 und die zweite Stromversorgung versorgt die Netzwerkeinrichtungen 823, 824, 813, 814, 832. Dadurch kann ein babbelnder Steuerrechner schlimmstenfalls den Steuerrechner mit der gleichen Stromversorgung beeinträchtigen, das heißt einen Zustand herstellen, der mit dem Ausfall einer Stromversorgung vergleichbar ist.
Die zweite Stromversorgung und damit die an ihr angeschlossenen Netzwerkeinrichtungen bleiben hiervon unberührt.

Der diese Links passierende kritische Verkehr ist manuell oder per Autokonfigurationsmechanismen zu bestimmen. Dabei ist die maximal zulässige Bandbreite in den Fuses F1 - F5 mit einer definierten Reserve einzustellen, die beispielsweise konservativ mit 100% abgeschätzt werden kann. Die Summe aus geplantem Verkehr im inneren Ring, gebildet durch die Segmente 702 und 703, und maximal durch den Außenringport in den inneren Ring eindringenden Verkehrs darf den Fuses F2 (F2 = 50%) zwischen den Steuerrechnern 811 - 814 eingestellten Wert nicht überschreiten, da sonst der von außen kommende Verkehr die Kommunikation im inneren Ring unterbrechen könnte. Beispielsweise ist in Fig. 9 von dem Steuerrechner 811 an den Steuerrechner 812 eine Bandbreite von 25% geplant. Die Fuse F4 des Steuerrechners 812 lässt maximal 20% aus dem Außenring eindringen, das heißt die Fuse F2 des Steuerrechners 814 muss mindestens 25% + 20% Last erlauben. Im Beispiel der Fig. 9 sind unter Berücksichtigung einer Sicherheitsreserve 50% für die Fuse F2 des Steuerrechners 814 eingestellt.

Ferner begrenzen die Fuses F3 - F5 (F3 = 35%, F4 = 20%, F5 = 10%) die Bandbreite auf einen deutlich höheren Wert als die Fuses F1 und F2 (F2 = 80%, F2 = 50%). Falls ein Babbling Idiot mit sehr hoher Bandbreite babbelt, wird er so lokal isoliert und beeinträchtigt nicht die Funktion anderer Netzwerkeinrichtungen. Die Funktion der Fuses F1 - F5 in der Ausführungsform der Fig. 9 wird im Folgenden anhand von zwei Beispielen erläutert:
In einem ersten Beispiel wird angenommen, dass die Netzwerkeinrichtung 832 der Babbling Idiot ist:
   Hierbei können vier Fälle unterschieden werden:
      Fall 1:
         Die Netzwerkeinrichtung 832 babbelt mit einer Bandbreite von bis zum 9%: Dieses Babbeln mit geringer Bandbreite wird von keiner der Fuses F1 - F5 erkannt. Die verschwendeten 8% Bandbreite führen zu keiner Beeinträchtigung des Gesamtsystems der Netzwerkanordnung 102.
      Fall 2:
         Die Netzwerkeinrichtung 832 babbelt mit einer Bandbreite von 9% + ε bis 20% - ε. Die Netzwerkeinrichtung 822 desselben Segmentes 705 fügt Ihren geplanten Anteil von 1% hinzu. Damit löst die Fuse F5 der Netzwerkeinrichtung 831 aus. Die Fuse F4 am Außenringport des Steuerrechners 814 löst noch nicht aus. Damit ist die Netzwerkeinrichtung 832 als defekt anzunehmen. Demgegenüber ist die Netzwerkeinrichtung 822 nicht defekt, aber von der Kommunikation mit den Steuerrechnern 811 bis 814 getrennt und damit verloren. Die Verbindung über den Pfad V1 ist durch die Fuse F5 unterbrochen und die Verbindung über den Pfad V2 durch die defekte Netzwerkeinrichtung 832. Damit verschwendet die Netzwerkeinrichtung 832 bis zu 20% Bandbreite auf Kosten des nicht-kritischen Verkehrs.
      Fall 3:
         Die Netzwerkeinrichtung 832 babbelt mit einer Bandbreite von 20% bis 80% - ε: Zusätzlich zu der Fuse F5 der Netzwerkeinrichtung 831 löst die Fuse F4 des Steuerrechners 814 am Außenringport des Steuerrechners 814 aus. Die Netzwerkeinrichtung 832 und die Netzwerkeinrichtung 822 sind von der Kommunikation getrennt. Der Rest des Kommunikationsnetzwerks 102 ist nicht beeinträchtigt. Lediglich die Redundanz durch das Netzwerksegment 705 ist damit verloren.
      Fall 4:
         Die Netzwerkeinrichtung 832 babbelt mit einer Bandbreite von mehr als 80%. Die Fuse F4 des Steuerrechners 814 und die Fuse F5 an der Netzwerkeinrichtung 822 lösen aus. Damit ist die Netzwerkeinrichtung 832 von der Kommunikation abgetrennt, der Rest des Kommunikationsnetzwerks 102 ist aber nicht beeinträchtigt. Lediglich die Redundanz im rechten äußeren Ring ist verloren. Auch die Netzwerkeinrichtung 822 ist in diesem Fall 4 nicht verloren.

Das zweite Beispiel basiert auf der Annahme, dass der Steuerrechner 811 der Babbling Idiot ist. Hier können drei Fälle unterschieden werden:
Fall 1:
   Der Steuerrechner 811 babbelt mit einer geringen Bandbreite. Möglicherweise löst eine der Fuses F5 zwischen den Netzwerkeinrichtungen 831 und 822 aus, da hier eine geringe zulässige Bandbreite (F5 = 10%) eingestellt ist. Dieser Effekt ist unerwünscht, führt aber nicht zum Verlust einer Netzwerkeinrichtung, sondern lediglich zum Verlust der Redundanzen im rechten Außenring bestehend aus den Segmenten 704 und 705. Die Fuses, die die äußeren Ringe vom Außenringport F5 des gegenüberliegenden Steuerrechners trennen könnten, lösen nicht aus, da die auf den äußeren Ring gesendeten Pakete dem VLAN V1 oder dem VLAN V2 angehören müssen. Keinesfalls werden Datenpakte kommen, die von dem einen Steuerrechner 811 gesendet werden, vom anderen Steuerrechner 813 empfangen, da dieser immer dem anderen VLAN V2, V1 angehört. Er wird also keine Netzwerkeinrichtung und kein Steuerrechner von der Kommunikation ausgegrenzt, die verschwendete Bandbreite geht auf Kosten des nicht-kritischen Verkehrs.
Fall 2:
   Der Steuerrechner 811 babbelt mit einer höheren Bandbreite von bis zu 80% - ε: Je nach VLAN V1 - V4, auf dem der Steuerrechner 811 babbelt und sonstigem Verkehr können die Fuses F2 der Steuerrechner 812, 813, 814 auslösen. Hierbei sind die beiden folgenden Unterfälle i) und ii) zu unterscheiden: Unterfall i): Nur die Fuse F2 des Steuerrechners 813 löst aus: Die Steuerrechner 812, 813, 814 sind nicht-redundant verbunden, der rechte Außenring aus den Segmenten 704 und 705 ist redundant angebunden. Der linke Außenring aus dem Segment 701 ist nicht-redundant angebunden. Bis zu 50% der Bandbreite können auf dem VLAN V1 beziehungsweise dem VLAN V3 verschwendet sein. Das VLAN V2 ist funktionsfähig und verbindet die Steuerrechner 812, 813, 814 mit den Netzwerkeinrichtungen der Außenringe.

   Unterfall ii): Die Fuse F2 des Steuerrechners 813 und zusätzlich die Fuse F2 des Steuerrechners 812 und/oder die Fuse F2 des Steuerrechners 814 lösen aus: Der eigentlich funktionsfähige Steuerrechner 812 wird vom inneren Ring abgetrennt. Die Steuerrechner 813 und 814 bleiben nicht-redundant untereinander mit allen Netzwerkeinrichtungen der Außenringe verbunden. Im ungünstigsten Fall werden 50% der Bandbreite verschwendet.
Fall 3:
   Der Steuerrechner 811 babbelt mit einer Bandbreite von mehr als 80%: Die Fuse F2 des Steuerrechners 813 und die Fuse F1 des Steuerrechners 812 lösen aus. Der defekte Steuerrechner 811 wird von der Kommunikation ausgeschlossen. Alle anderen Steuerrechner 812 - 814 und die Netzwerkeinrichtungen der Außenringe sind mindestens nicht-redundant verbunden, der rechte Außenring aus den Segmenten 704, 705 sogar redundant. Hier steht die volle Bandbreite zur Verfügung, weil der Babbling Idiot, hier der Steuerrechner 811, isoliert ist.

Obwohl die Erfindung im Detail durch das bevorzugte Ausführungsbeispiel näher illustriert und beschrieben wurde, so ist die Erfindung nicht durch die offenbarten Beispiele eingeschränkt, und andere Variationen können vom Fachmann hieraus abgeleitet werden, ohne den Schutzumfang der Erfindung zu verlassen. Insbesondere können Ausführungsformen der Netzwerkanordnung weitere netzwerkfähige Elemente aufweisen, die auch einen Babbling Idiot darstellen können.

## Patentansprüche

1. Verfahren zum Betreiben eines Kommunikationsnetzwerks (102) für an das Kommunikationsnetzwerk (6) gekoppelte Netzwerkeinrichtungen (400) für sicherheitsrelevante Anwendungen, wobei eine jeweilige Netzwerkeinrichtung (400) eine erste und eine zweite Switch-Einrichtung (4, 5) und eine erste und eine zweite Steuereinrichtung (2, 3) umfasst, wobei die erste Steuereinrichtung (2) an die erste Switch-Einrichtung (4) und die zweite Steuereinrichtung (3) an die zweite Switch-Einrichtung (5) gekoppelt ist, und wobei die erste und die zweite Switch-Einrichtung (4, 5) einen Empfangsport (10) und einen Sendeport (9) zum Senden und Empfangen von Daten über das Kommunikationsnetzwerk (6) haben und den Empfangsports (10) Fuse-Einrichtungen (20) zum Begrenzen einer Datenübertragungsrate zugeordnet sind, wobei das Verfahren umfasst:
Vorgeben einer maximalen Datenübertragungsrate beim Senden von Daten, wobei die Netzwerkeinrichtungen (400) eingerichtet sind, Daten mit einer Datenrate zu senden, welche niedriger ist als die vorgegebene maximale Datenübertragungsrate;
Überwachen einer Datenübertragungsrate von empfangenen Daten an den Empfangsports (10) der Netzwerkeinrichtungen (400) ;
Blockieren eines Datenempfangs an einem Empfangsport (10), falls ankommende Daten eine Datenübertragungsrate haben, die größer ist als die vorgegebene maximale Datenübertragungsrate; und
Erzeugen von ersten Daten (D1) durch die erste Steuereinrichtung (2) und zweiten Daten (D2) durch die zweite Steuerreinrichtung (3), wobei die ersten Daten (D1) und die zweiten Daten (D2) durch eine vorgegebene Kodierung miteinander verknüpft sind.

2. Verfahren nach Anspruch 1, wobei das Verfahren ferner umfasst:
Senden der ersten Daten (D1) von der ersten Steuereinrichtung (2) über die erste Switch-Einrichtung (4) an die zweite Steuereinrichtung (3) und Senden der zweiten Daten (D2) von der zweiten Steuereinrichtung (3) über die zweite Switch-Einrichtung (5) an die erste Steuereinrichtung (2) ;
Senden der ersten Daten (D1) und der zweiten Daten (D2) über einen ersten Kommunikationspfad (CB1, CB2, CB3) von dem Sendeport (9) der ersten Switch-Einrichtung (4) für die erste Steuereinrichtung (2) zu dem Empfangsport (14) der zweiten Switch-Einrichtung (5) für die zweite Steuereinrichtung (3);
Senden der ersten Daten (D1) und der zweiten Daten (D2) über einen zweiten Kommunikationspfad (CR1, CR2, CR3) von dem Sendeport (13) der ersten Switch-Einrichtung (4) für die zweite Steuereinrichtung (3) zu dem Empfangsport (10) der zweiten Switch-Einrichtung (5) für die erste Steuereinrichtung (2);
wobei die Daten des ersten und des zweiten Kommunikationspfads (CB1, CB2, CB3, CR1, CR2, CR3) dieselben Netzwerkeinrichtungen (200, 300) in entgegen gesetzter Richtung durchlaufen.

3. Verfahren nach Anspruch 1 oder 2, ferner umfassend:
Freigeben eines Datenempfangs an einem Empfangsport (10, 14), falls ankommende Daten eine Datenübertragungsrate haben, die geringer ist als die vorgegebene maximale Datenübertragungsrate.

4. Verfahren nach einem der Ansprüche 1 - 3, wobei für jeden Kommunikationspfad zwischen einem Sendeport (9, 13) und einem Empfangsport (10, 14) eine maximale Linkübertragungsrate vorgegeben wird.

5. Verfahren nach einem der Ansprüche 1 - 4, wobei die Daten mindestens zwei Prioritätsklassen zugeordnet werden und die Datenübertragungsrate ausschließlich für Daten einer ausgewählten Prioritätsklasse überwacht wird und/oder ein Datenempfang blockiert wird.

6. Verfahren nach einem der Ansprüche 1 - 5, wobei die Daten mindestens zwei Prioritätsklassen zugeordnet werden und zum Abschätzen einer Datenübertragungsrate für Daten einer ausgewählten Prioritätsklasse eine Wartezeit für die Daten der ausgewählten Prioritätsklasse in einer Switch-Einrichtung (4, 5) erfasst wird.

7. Verfahren nach einem der Ansprüche 2 - 6, ferner umfassend:
Senden der ersten Daten (D1) und der zweiten Daten (D2) über den Sendeport (9) der ersten Switch-Einrichtung (4) für die erste Steuereinrichtung (2) an den Empfangsport (14) der zweiten Switch-Einrichtung (5) für die zweite Steuereinrichtung (3) über mindestens eine weitere Switch-Einrichtung (204) einer weiteren Netzwerkeinrichtung (200) mit einer ersten und zweiten Steuereinrichtung (202, 203); und
Senden der ersten Daten (D1) und der zweiten Daten (D2) über den Sendeport (13) der zweiten Switch-Einrichtung (5) für die zweite Steuereinrichtung (3) an den Empfangsport (10) der ersten Switch-Einrichtung (4) für die erste Steuereinrichtung (2) über mindestens eine weitere Switch-Einrichtung (204) einer weiteren Netzwerkeinrichtung (200) mit einer ersten und zweiten Steuereinrichtung (202, 203);
wobei in einer jeweiligen weiteren Switch-Einrichtung (204) an einem Empfangsport (214) für die zweite Steuereinrichtung (203) der weiteren Switch-Einrichtung (204) empfangene Daten an einen Sendeport (209) für die erste Steuereinrichtung (202) der weiteren Switch-Einrichtung (204) weitergeleitet werden, und an einem Empfangsport (210) für die erste Steuereinrichtung (202) der weiteren Switch-Einrichtung (204) empfangene Daten an einen Sendeport (213) für die zweite Steuereinrichtung (203) der weiteren Switch-Einrichtung (204) weitergeleitet werden.

8. Verfahren nach einem der Ansprüche 2 - 7, ferner umfassend: Vergleichen der ersten Daten (D1) mit den zweiten Daten (D2) in der ersten und/oder zweiten Steuereinrichtung (2, 3) zum Erzeugen eines Vergleichsergebnisses; und Passivieren der Netzwerkeinrichtung (1) in Abhängigkeit von dem Vergleichsergebnis.

9. Verfahren nach einem der Ansprüche 2 - 8, ferner umfassend: in einer weiteren Netzwerkeinrichtung (200) Empfangen der ersten Daten (D1) und der zweiten Daten (D2) an Eingangsports (210, 214) für unterschiedliche Steuereinrichtungen (202, 203), und Vergleichen der empfangenen Daten.

10. Verfahren (1) nach einem der Ansprüche 1 - 9,
**dadurch gekennzeichnet,**
**dass** das Kommunikationsnetzwerk (6) ein Ethernet-Netzwerk ist.

11. Verfahren nach einem der Ansprüche 1 - 10,
**dadurch gekennzeichnet,**
**dass** den Fuse-Einrichtungen (F1-F5) von zumindest zwei Netzwerkeinrichtungen (811-814, 821-822, 831-832, 841-842, 851-852) verschiedene Schwellwerte für die Datenübertragungsrate zugeordnet werden, wobei ein jeder der verschiedenen Schwellwerte kleiner oder gleich der vorgegebenen maximalen Datenübertragungsrate ist, wobei ein Datenempfang an einem Empfangsport (7, 10, 11, 14, 15, 17) der zumindest zwei Netzwerkeinrichtungen (811-814, 821-822, 831-832, 841-842, 851-852) blockiert wird, falls die an dem zugeordneten Empfangsport (7, 10, 11, 14, 15, 17) ankommenden Daten eine Datenübertragungsrate haben, die größer als der zugeordnete Schwellwert ist.

12. Verfahren nach Anspruch 11,
**dadurch gekennzeichnet,**
**dass** die Netzwerkeinrichtungen (811-814, 821-822, 831-832, 841-842, 851-852) in einer Mehrzahl von Netzwerksegmenten (701-707) verteilt angeordnet werden, wobei einem jeden der Netzwerksegmente (701-707) eine Teilmenge der Netzwerkeinrichtungen (811-814, 821-822, 831-832, 841-842, 851-852) zugeordnet wird, wobei bei einem jeden Netzwerksegment (701-707) mit zumindest zwei zugeordneten Netzwerkeinrichtungen (811-814, 821-822, 831-832, 841-842, 851-852) einer an einem Randbereich des Netzwerksegments (701-707) angeordneten Fuse-Einrichtung (F1-F5) ein kleinerer Schwellwert für die Datenübertragungsrate als bei einer in einem Mittenbereich des Netzwerksegments (701-707) angeordneten Fuse-Einrichtung (F1-F5) zugeordnet wird.

13. Verfahren nach Anspruch 12,
**dadurch gekennzeichnet,**
**dass** die Teilmengen als disjunkte Teilmengen gebildet werden.

14. Verfahren nach einem der Ansprüche 11 - 13,
**dadurch gekennzeichnet,**
**dass** die Netzwerkeinrichtungen (811-814, 821-822, 831-832, 841-842, 851-852) zumindest zwei hinsichtlich ihrer Funktionalität redundante Netzwerkeinrichtungen (811-814, 821-822, 831-832, 841-842, 851-852) umfassen, wobei die Teilmengen derart gebildet werden, dass einer jeden der Teilmengen höchstens eine der redundanten Netzwerkeinrichtungen (811-814, 821-822, 831-832, 841-842, 851-852) zugeordnet wird.

15. Verfahren nach einem der Ansprüche 12 - 14,
**dadurch gekennzeichnet,**
**dass** in dem Kommunikationsnetzwerks (102) eine Mehrzahl von virtuellen Netzen (V1-V5) derart implementiert wird, um eine Überschreiten des Schwellwertes für die Datenübertragungsrate an einer Fuse-Einrichtung (F1-F5) eines Netzwerksegments (701-707) aufgrund eines Empfangs von Daten aus einem anderen Netzwerksegment (701-707) zu vermeiden.

16. Verfahren nach Anspruch 15,
**dadurch gekennzeichnet,**
**dass** der jeweilige Schwellwert für die Datenübertragungsrate der jeweiligen Fuse-Einrichtung (F1-F5) in Abhängigkeit von dem virtuellen Netz (V1-V4) eingestellt wird, in dem die jeweilige Fuse-Einrichtung (F1-F5) angeordnet ist.

17. Computerprogrammprodukt, welches die Durchführung eines Verfahrens nach einem der Ansprüche 1 - 16 auf einer oder mehrerer programmgesteuerter Einrichtungen (1, 100, 200, 300) veranlasst.

18. Datenträger mit einem gespeicherten Computerprogramm mit Befehlen, welche die Durchführung eines Verfahrens nach einem der Ansprüche 1 - 16 auf einer oder mehrerer programmgesteuerter Einrichtungen (1, 100, 200, 300) veranlasst.

19. Netzwerkanordnung (101) mit mehreren Netzwerkeinrichtungen (1, 201, 301), welche an ein Kommunikationsnetzwerk (6) für sicherheitsrelevante Anwendungen gekoppelt sind, wobei eine jeweilige Netzwerkeinrichtung (1) eine erste und eine zweite Switch-Einrichtung (4, 5) und eine erste und eine zweite Steuereinrichtung (2, 3) aufweist, wobei die erste Switch-Einrichtung (4) der ersten Steuereinrichtung (2) zugeordnet ist und die zweite Switch-Einrichtung (5) der zweiten Steuereinrichtung (3) zugeordnet ist, und wobei die Switch-Einrichtungen (4, 5) jeweils einen Empfangsport (10, 14) und einen Sendeport (9, 13) zum Senden und Empfangen von Daten über das Kommunikationsnetzwerk (6) haben, und mit mindestens einer dem Empfangsport (10) zugeordneten Fuse-Einrichtungen (20) zum Begrenzen einer Datenübertragungsrate, wobei die Netzwerkeinrichtungen (400) eingerichtet sind, ein Verfahren nach einem der Ansprüche 1 - 16 durchzuführen.

20. Netzwerkanordnung (101) nach Anspruch 19,
**dadurch gekennzeichnet**,
die Switch-Einrichtungen (4, 5) kommunikativ miteinander gekoppelt sind.

21. Netzwerkanordnung (101) nach Anspruch 19 oder 20,
**dadurch gekennzeichnet,**
**dass** die Netzwerkeinrichtungen (1, 100, 200 ,300) und/oder die Fuse-Einrichtungen (20, 21, 220, 221, 320,321) jeweils als einzelner FPGA, ASIC, IC Chip, oder fest verdrahteter Mikroschaltkreis ausgeführt sind.

## Claims

1. Method for operating a communications network (102) for network devices (400) which are coupled to the communications network (6) for safety-relevant applications, wherein a respective network device (400) comprises a first and second switch device (4,5) and a first and second control device (2,3), wherein the first control device (2) is coupled to the first switch device (4) and the second control device (3) is coupled to the second switch device (5), and wherein the first and second switch device (4,5) have a reception port (10) and a transmission port (9) for transmitting and receiving data via the communications network (6), and the reception port (10) is assigned fuse devices (20) for limiting a data transmission rate, wherein the method comprises:
predefining a maximum data transmission rate during the transmission of data, wherein the network devices (400) are configured to transmit data at a data rate which is lower than the predefined maximum data transmission rate;
monitoring a data transmission rate of received data at the reception ports (10) of the network devices (400);
blocking data reception at a reception port (10) if incoming data has a data transmission rate which is higher than the predefined maximum data transmission rate, and
generating first data items (D1) by means of the first control device (2) and second data items (D2) by means of the second control device (3), wherein the first data items (D1) and the second data items (D2) are linked to one another by means of predefined coding.

2. Method according to Claim 1, wherein the method also comprises:
transmitting the first data items (D1) from the first control device (2) to the second control device (3) via the first switch device (4) and transmitting the second data items (D2) from the second control device (3) to the first control device (2) via the second switch device (5);
transmitting the first data items (D1) and the second data items (D2) via a first communication path (CB1, CB2, CB3) from the transmission port (9) of the first switch device (4) for the first control device (2) to the reception port (14) of the second switch device (5) for the second control device (3);
transmitting the first data items (D1) and the second data items (D2) via a second communication path (CR1, CR2, CR3) from the transmission port (13) of the first switch device (4) for the second control device (3) to the reception port (10) of the second switch device (5) for the first control device (2);
wherein the data items of the first and second communication paths (CB1, CB2, CB3, CR1, CR2, CR3) pass through the same network devices (200, 300) in opposite directions.

3. Method according to Claim 1 or 2, also comprising:
releasing a data reception at a reception port (10, 14) if incoming data has a data transmission rate which is lower than the predefined maximum data transmission rate.

4. Method according to one of Claims 1-3, wherein a maximum link transmission rate is predefined for each communication path between a transmission port (9, 13) and a reception port (10, 14).

5. Method according to one of Claims 1-4, wherein the data is assigned at least two priority classes and the data transmission rate is monitored exclusively for data of a selected priority class and/or data reception is blocked.

6. Method according to one of Claims 1-5, wherein the data is assigned at least two priority classes, and in order to estimate a data transmission rate for data of a selected priority class a waiting time for the data of the selected priority class is detected in a switch device (4, 5).

7. Method according to one of Claims 2-6, also comprising:
transmitting the first data items (D1) and the second data items (D2) via the transmission port (9) of the first switch device (4) for the first control device (2) to the reception port (14) of the second switch device (5) for the second control device (3) via at least one further switch device (204) of a further network device (200) with a first and a second control device (202, 203); and
transmitting the first data items (D1) and the second data items (D2) via the transmission port (13) of the second switch device (5) for the second control device (3) to the reception port (10) of the first switch device (4) for the first control device (2) via at least one further switch device (204) of a further network device (200) with a first and a second control device (202, 203);
wherein in a respective further switch device (204) data received at a reception port (214) for the second control device (203) of the further switch device (204) is passed on to a transmission port (209) for the first control device (202) of the further switch device (204), and data received at a reception port (210) for the first control device (202) of the further switch device (204) is passed on to a transmission port (213) for the second control device (203) of the further switch device (204).

8. Method according to one of Claims 2-7, also comprising: comparing the first data items (D1) with the second data items (D2) in the first and/or second control device (2, 3) in order to generate a comparison result; and passivizing the network device (1) as a function of the comparison result.

9. Method according to one of Claims 2-8, also comprising: receiving the first data items (D1) and the second data items (D2) at input ports (210, 214) for different control devices (202, 203) in a further network device (200), and comparing the received data items.

10. Method (1) according to one of Claims 1-9,
**characterized**
**in that** the communications network (6) is an Ethernet network.

11. Method according to one of Claims 1-10,
**characterized**
**in that** the fuse devices (F1-F5) of at least two network devices (811-814, 821-822, 831-832, 841-842, 851-852) are assigned various threshold values for the data transmission rate, wherein each of the various threshold values is lower than or equal to the predefined maximum data transmission rate, wherein data reception at a reception port (7, 10, 11, 14, 15, 17) of the at least two network devices (811-814, 821-822, 831-832, 841-842, 851-852) is blocked if the data incoming at the assigned reception port (7, 10, 11, 14, 15, 17) has a data transmission rate which is higher than the assigned threshold value.

12. Method according to Claim 11,
**characterized**
**in that** the network devices (811-814, 821-822, 831-832, 841-842, 851-852) are arranged distributed in a multiplicity of network segments (701-707), wherein each of the network segments (701-707) is assigned a subset of the network devices (811-814, 821-822, 831-832, 841-842, 851-852), wherein at each network segment (701-707) with at least two assigned network devices (811-814, 821-822, 831-832, 841-842, 851-852) a fuse device (F1-F5) which is arranged at an edge region of the network segment (701-707) is assigned a lower threshold value for the data transmission rate than in the case of a fuse device (F1-F5) which is arranged in a middle region of the network segment (701-707).

13. Method according to Claim 12,
**characterized**
**in that** the subsets are formed as disjunctive subsets.

14. Method according to one of Claims 11-13,
**characterized**
**in that** the network devices (811-814, 821-822, 831-832, 841-842, 851-852) comprise at least two network devices (811-814, 821-822, 831-832, 841-842, 851-852) which are redundant with respect to their functionality, wherein the subsets are formed in such a way that each of the subsets is assigned one of the redundant network devices (811-814, 821-822, 831-832, 841-842, 851-852) at most.

15. Method according to one of Claims 12-14,
**characterized**
**in that** a multiplicity of virtual networks (V1-V5) are implemented in the communications network (102) in order to avoid the threshold value for the data transmission rate being exceeded at a fuse device (F1-F5) of a network segment (701-707) owing to reception of data from another network segment (701-707).

16. Method according to Claim 15,
**characterized**
**in that** the respective threshold value for the data transmission rate of the respective fuse device (F1-F5) is set as a function of the virtual network (V1-V4) in which the respective fuse device (F1-F5) is arranged.

17. Computer program product which brings about the execution of a method according to one of Claims 1-16 on one or more program-controlled devices (1, 100, 200, 300).

18. Data carrier having a stored computer program with instructions which bring about the execution of a method according to one of Claims 1-16 on one or more program-controlled devices (1, 100, 200, 300).

19. Network arrangement (101) having a plurality of network devices (1, 201, 301) which are coupled to a communications network (6) for safety-relevant applications, wherein a respective network device (1) has a first and a second switch device (4, 5) and a first and a second control device (2, 3), wherein the first switch device (4) is assigned to the first control device (2) and the second switch device (5) is assigned to the second control device (3), and wherein the switch devices (4, 5) have a reception port (10, 14) and a transmission port (9, 13) for transmitting and receiving data via the communications network (6), and having at least one fuse device (20), assigned to the reception port (10), for limiting a data transmission rate, wherein the network devices (400) are configured to carry out a method according to one of Claims 1-16.

20. Network arrangement (101) according to Claim 19,
**characterized**
**in that** the switch devices (4, 5) are coupled to one another communicatively.

21. Network arrangement (101) according to Claim 19 or 20,
**characterized**
**in that** the network devices (1, 100, 200, 300) and/or the fuse devices (20, 21, 220, 221, 320, 321) are each embodied as a single FPGA, ASIC, IC chip or hard-wired microcircuit.

## Revendications

1. Procédé d'exploitation d'un réseau de communication (102) pour des dispositifs de réseau (400) couplés au réseau de communication (6) pour des applications de sécurité, un dispositif de réseau respectif (400) comprenant un premier et un deuxième dispositif de commutation (4, 5) et un premier et un deuxième dispositif de commande (2, 3), le premier dispositif de commande (2) étant couplé au premier dispositif de commutation (4) et le deuxième dispositif de commande (3) étant couplé au deuxième dispositif de commutation (5), et le premier et le deuxième dispositif de commutation (4, 5) ayant un port de réception (10) et un port d'émission (9) pour émettre et recevoir des données sur le réseau de communication (6) et aux ports de réception (10) étant affectés des dispositifs fusibles (20) pour limiter un débit de transmission de données, le procédé comprenant :
- la spécification d'un débit de transmission de données maximal à l'émission de données, les dispositifs de réseau (400) étant configuré pour émettre des données avec un débit de données inférieur au débit de transmission de données maximal spécifié ;
- la surveillance d'un débit de transmission de données reçues au niveau des ports de réception (10) des dispositifs de réseau (400) ;
- le blocage d'une réception de données à un port de réception (10) si des données arrivantes ont un débit de transmission de données supérieur au débit de transmission de données maximal spécifié ;
et
- la génération de premières données (D1) par le premier dispositif de commande (2) et de deuxièmes données (D2) par le deuxième dispositif de commande (3), les premières données (Dl) et les deuxièmes données (D2) étant associées entre elles par un codage prédéfini.

2. Procédé selon la revendication 1, le procédé comprenant en outre :
- l'envoi des premières données (Dl) par le premier dispositif de commande (2) via le premier dispositif de commutation (4) au deuxième dispositif de commande (3) et l'envoi des deuxièmes données (D2) par le deuxième dispositif de commande (3) via le deuxième dispositif de commutation (5) au premier dispositif de commande (2) ;
- envoi des premières données (Dl) et des deuxièmes données (D2), sur un premier chemin de communication (CB1, CB2, CB3), du port d'émission (9) du premier dispositif de commutation (4) pour le premier dispositif de commande (2) au port de réception (14) du deuxième dispositif de commutation (5) pour le deuxième dispositif de commande (3) ;
- envoi des premières données (Dl) et des deuxièmes données (D2), sur un deuxième chemin de communication (CR1, CR2, CR3), du port d'émission (13) du premier dispositif de commutation (4) pour le deuxième dispositif de commande (3) au port de réception (10) du deuxième dispositif de commutation (5) pour le premier dispositif de commande (2) ;
les données du premier et du deuxième chemin de communication (CB1, CB2, CB3, CR1, CR2, CR3) passant par les mêmes dispositifs de réseau (200, 300) en sens contraire.

3. Procédé selon la revendication 1 ou 2, comprenant en outre :
la validation d'une réception de données au niveau d'un port de réception (10, 14) si des données arrivantes ont un débit de transmission de données inférieur au débit de transmission de données maximal spécifié.

4. Procédé selon l'une des revendications 1 à 3, un débit de transmission de lien maximal étant spécifié pour chaque chemin de communication entre un port d'émission (9, 13) et un port de réception (10, 14).

5. Procédé selon l'une des revendications 1 à 4, les données étant affectées à au moins deux classes de priorité et le débit de transmission de données étant surveillé uniquement pour des données d'une classe de priorité sélectionnée et/ou une réception de données étant bloquée.

6. Procédé selon l'une des revendications 1 à 5, les données étant affectées à au moins deux classes de priorité et, pour l'estimation d'un débit de transmission de données pour des données d'une classe de priorité sélectionnée, un temps d'attente pour les données de la classe de priorité sélectionnée étant saisi dans un dispositif de commutation (4, 5).

7. Procédé selon l'une des revendications 2 à 6, comprenant en outre :
- l'envoi des premières données (Dl) et des deuxièmes données (D2) via le port d'émission (9) du premier dispositif de commutation (4) pour le premier dispositif de commande (2) au port de réception (14) du deuxième dispositif de commutation (5) pour le deuxième dispositif de commande (3) via au moins un autre dispositif de commutation (204) d'un autre dispositif de réseau (200) avec un premier et un deuxième dispositif de commande (202, 203) ; et
- l'envoi des premières données (Dl) et des deuxièmes données (D2) via le port d'émission (13) du deuxième dispositif de commutation (5) pour le deuxième dispositif de commande (3) au port de réception (10) du premier dispositif de commutation (4) pour le premier dispositif de commande (2) via au moins un autre dispositif de commutation (204) d'un autre dispositif de réseau (200) avec un premier et un deuxième dispositif de commande (202, 203) ;
des données reçues à un port de réception (214) pour le deuxième dispositif de commande (203) de l'autre dispositif de commutation (204) dans un autre dispositif de commutation respectif (204) étant retransmises à un port d'émission (209) pour le premier dispositif de commande (202) de l'autre dispositif de commutation (204) et des données reçues à un port de réception (210) pour le premier dispositif de commande (202) de l'autre dispositif de commutation (204) étant retransmises à un port d'émission (213) pour le deuxième dispositif de commande (203) de l'autre dispositif de commutation (204).

8. Procédé selon l'une des revendications 2 à 7, comprenant en outre :
la comparaison des premières données (Dl) avec les deuxièmes données (D2) dans le premier et/ou le deuxième dispositif de commande (2, 3) pour générer un résultat de comparaison ; et
la passivation du dispositif de réseau (1) en fonction du résultat de comparaison.

9. Procédé selon l'une des revendications 2 à 8, comprenant en outre :
la réception, dans un autre dispositif de réseau (200), des premières données (Dl) et des deuxièmes données (D2) au niveau de ports d'entrée (210, 214) pour différents dispositifs de commande (202, 203) ; et la comparaison des données reçues.

10. Procédé (1) selon l'une des revendications 1 à 9, **caractérisé en ce que** le réseau de communication (6) est un réseau Ethernet.

11. Procédé selon l'une des revendications 1 à 10, **caractérisé en ce que** différentes valeurs seuils du débit de transmission de données sont affectées aux dispositifs fusibles (F1-F5) d'au moins deux dispositifs de réseau (811-814, 821-822, 831-832, 841-842, 851-852), chacune des différentes valeurs seuils étant inférieure ou égale au débit de transmission de données maximal spécifié, une réception de données à un port de réception (7, 10, 11, 14, 15, 17) des au moins deux dispositifs de réseau (811-814, 821-822, 831-832, 841-842, 851-852) étant bloquée si les données qui arrivent au port de réception associé (7, 10, 11, 14, 15, 17) ont un débit de transmission de données supérieur à la valeur seuil associée.

12. Procédé selon la revendication 11, **caractérisé en ce que** les dispositifs de réseau (811-814, 821-822, 831-832, 841-842, 851-852) sont agencés de manière répartie dans une pluralité de segments de réseau (701-707), à chacun des segments de réseau (701-707) étant affecté un sous-ensemble des dispositifs de réseau (811-814, 821-822, 831-832, 841-842, 851-852), pour chaque segment de réseau (701- 707) avec au moins deux dispositifs de réseau associés (811-814, 821-822, 831-832, 841-842, 851-852) une valeur seuil du débit de transmission de données plus petite que pour un dispositif fusible (F1-F5) situé dans une zone centrale du segment de réseau (701-707) étant affectée à un dispositif fusible (F1-F5) situé au niveau d'une zone de bord du segment de réseau (701-707).

13. Procédé selon la revendication 12, **caractérisé en ce que** les sous-ensembles sont réalisés en tant que sous-ensembles disjoints.

14. Procédé selon l'une des revendications 11 - 13, **caractérisé en ce que** les dispositifs de réseau (811-814, 821-822, 831-832, 841-842, 851-852) comprennent au moins deux dispositifs de réseau (811-814, 821-822, 831-832, 841-842, 851-852) redondants en termes de fonctionnalité, les sous-ensembles étant réalisés de telle sorte qu'à chacun des sous-ensembles est affecté, au maximum, l'un des dispositifs de réseau redondants (811-814, 821-822, 831-832, 841-842, 851-852).

15. Procédé selon l'une des revendications 12 à 14, **caractérisé en ce que** dans le réseau de communication (102) une pluralité de réseaux virtuels (V1-V5) sont implémentés de manière à empêcher un dépassement de la valeur seuil du débit de transmission de données au niveau d'un dispositif fusible (F1-F5) d'un segment de réseau (701-707) sur la base d'une réception de données provenant d'un autre segment de réseau (701-707).

16. Procédé selon la revendication 15, **caractérisé en ce que** la valeur seuil respective du débit de transmission de données du dispositif fusible respectif (F1-F5) est réglée en fonction du réseau virtuel (V1-V4) dans lequel est agencé le dispositif fusible respectif (F1-F5).

17. Produit de programme informatique qui fait procéder à l'exécution d'un procédé selon l'une des revendications 1 à 16 sur un ou plusieurs dispositifs commandés par programme (1, 100, 200, 300).

18. Support de données comportant un programme informatique en mémoire avec des ordres pour faire exécuter un procédé selon l'une des revendications 1 à 16 sur un ou plusieurs dispositifs commandés par programme (1, 100, 200, 300).

19. Configuration de réseau (101) comportant plusieurs dispositifs de réseau (1, 201, 301) couplés à un réseau de communication (6) pour des applications de sécurité, un dispositif de réseau respectif (1) comportant un premier et un deuxième dispositif de commutation (4, 5) et un premier et un deuxième dispositif de commande (2, 3), le premier dispositif de commutation (4) étant associé au premier dispositif de commande (2) et le deuxième dispositif de commutation (5) étant associé au deuxième dispositif de commande (3), et les dispositifs de commutation (4, 5) ayant respectivement un port de réception (10, 14) et un port d'émission (9, 13) pour émettre et recevoir des données sur le réseau de communication (6), et comportant au moins un dispositif fusible (20) affecté au port de réception (10) pour limiter un débit de transmission de données, les dispositifs de réseau (400) étant configurés pour exécuter un procédé selon l'une des revendications 1 à 16.

20. Configuration de réseau (101) selon la revendication 19, **caractérisée en ce que** les dispositifs de commutation (4, 5) sont couplés entre eux de manière communicative.

21. Configuration de réseau (101) selon la revendication 19 ou 20, **caractérisé en ce que** les dispositifs de réseau (1, 100, 200 ,300) et/ou les dispositifs fusibles (20, 21, 220, 221, 320,321) sont réalisés respectivement en tant que microcircuit FPGA, ASIC, IC Chip individuel ou câblé à demeure.
